# EUROPEAN PATENT APPLICATION

(11) **EP 4 714 982 A1**
(43) Date of publication of application: **25.03.2026**
(21) Application number: 24806909.8
(22) Date of filing: 10.04.2024
(51) Int. Cl.: C08F 2/01, C08F 20/10, C08L 101/16

(54) **VINYL POLYMER PRODUCTION DEVICE AND METHOD FOR PRODUCING VINYL POLYMER**

(30) Priority: 15.05.2023 JP 2023080294
(71) Applicant: Sumitomo Chemical Company, Limited, Tokyo 103-6020 (JP)
(72) Inventor: KADOYA, Hidenori, Niihama-shi, Ehime 792-8521 (JP); YASUTOMI, Yoichi, Niihama-shi, Ehime 792-8521 (JP)
(74) Representative: Global IP Europe Patentanwaltskanzlei
(86) International application number: PCT/JP2024/014515
(87) International publication number: WO 2024/236955

(57) **Abstract**

An object of the present invention is to provide a vinyl polymer production device for producing a vinyl polymer at a low cost while reducing energy consumption. A vinyl polymer production device 1 of the present invention includes a polymerization reaction tank 10 for obtaining a vinyl polymer composition, a raw material vinyl monomer supply unit 20 including a non-recycled/non-bio raw material vinyl monomer supply unit 22 and a raw material vinyl monomer supply pump 24, a devolatilization unit 30 for separating a liquid vinyl polymer and a gaseous unreacted vinyl monomer, the devolatilization unit having a vinyl polymer composition introduction port 32, a vinyl polymer discharge port 34, a first unreacted vinyl monomer discharge port 36, and a second unreacted vinyl monomer discharge port 38, a purifier 40 for separating and removing an impurity component, and a circulation unit 50 for circulating the unreacted vinyl monomer to the raw material vinyl monomer supply unit, in which a recycled/bio raw material vinyl monomer supply unit is connected to at least one selected from the group consisting of the raw material vinyl monomer supply unit, the polymerization reaction tank, the purifier, the circulation unit, and a third pipe 73.

## Description

### TECHNICAL FIELD

The present invention relates to a vinyl polymer production device and a method for producing a vinyl polymer, and more specifically, relates to a vinyl polymer production device and a method for producing a vinyl polymer which can be particularly suitably applied to production of a vinyl polymer adopting a mass balance system.

### BACKGROUND ART

Typical examples of (meth)acrylic acid ester contained in a so-called vinyl monomer include methyl methacrylate (MMA). Poly(methyl methacrylate) (PMMA), which is a vinyl polymer obtained by polymerizing methyl methacrylate, is excellent in transparency and is also excellent in weather resistance. Therefore, poly(methyl methacrylate) is widely used as a material for members constituting automobile parts, signage, display devices, and the like.

In producing poly(methyl methacrylate), there is known an aspect in which, when a monomer mixture containing methyl methacrylate as a main component is continuously bulk-polymerized using one perfect mixing type reactor without using a solvent, for the purpose of achieving a stable operation while adjusting a monomer conversion to an arbitrary monomer conversion, oxygen dissolved in the monomer mixture is set to 1 ppm or less, and then, the resulting mixture is stirred at a specific power consumption using an initiator having a specific half-life, and reacted at a specific monomer conversion at a specific temperature and residence time (see Patent Document 1).

In addition, in producing poly(methyl methacrylate), for the purpose of making it possible to recover and reuse an unreacted (meth)acrylic monomer in a state in which the unreacted (meth)acrylic monomer is not self-polymerized, in a method for producing a (meth)acrylic polymer, the method including: a step (A) of continuously supplying a raw material composition containing a (meth)acrylic monomer containing 50 mass% or more of methyl methacrylate, a radical polymerization initiator, and a chain transfer agent to a polymerization vessel; a step (B) of polymerizing at least a part of the (meth)acrylic monomer in the polymerization vessel to obtain a reaction mixture containing a (meth)acrylic polymer in which at least a part of the (meth)acrylic monomer is polymerized; and a step (C) of continuously withdrawing the reaction mixture from the polymerization vessel and performing a devolatilization treatment to separate and remove volatile components including a methyl methacrylate dimer and an unreacted (meth)acrylic monomer to obtain a (meth)acrylic polymer, a step (D) introducing the separated and removed volatile components into a distillation column and recovering a recovered component containing at least a part of the methyl methacrylate dimer contained in the volatile components and at least a part of the unreacted (meth)acrylic monomer contained in the volatile components under a condition in which a content of the methyl methacrylate dimer in the recovered component is 0.1 to 1.0 mass% is further performed (see Patent Document 2).

As resource prices have increased in recent years and awareness of environmental problems has increased, products containing poly(methyl methacrylate) (molded bodies) used for various applications as described above have been recovered and recycled.

Examples of a method of recycling poly(methyl methacrylate) include material recycling in which a recovered molded body is subjected to a molding step again to produce a new molded body, chemical recycling in which methyl methacrylate is recovered by subjecting a recovered molded body to a heat treatment to thermally decompose (depolymerize) poly(methyl methacrylate), and a new molded body is produced using the recovered methyl methacrylate (may be referred to as recycled MMA), and thermal recycling in which a recovered molded body is combusted as fuel, combustion energy is directly used as a heat source, and further, power is generated using combustion energy to be utilized.

It is preferable that poly(methyl methacrylate) is recycled by chemical recycling because methyl methacrylate can be recovered with a high yield and impurities can be reduced by heating at a relatively low temperature of about 300°C.

In addition, for example, from the viewpoint of reducing an environmental load, there are known a method of obtaining (recycling) methyl methacrylate, which is a vinyl monomer, by using thermal decomposition by chemical recycling as described above or fermentation by microorganisms using a biomass resource as a raw material, and further, an aspect in which poly(methyl methacrylate), which is a vinyl polymer, is produced by mixing methyl methacrylate (may also referred to as a recycled/bio raw material vinyl monomer), which is the (recycled) vinyl monomer thus obtained, with methyl methacrylate (may also referred to as a non-recycled/non-bio raw material vinyl monomer), which is a conventionally commonly used vinyl monomer derived from fossil fuel (a virgin vinyl monomer) produced using fossil fuel as a raw material and does not correspond to the recycled/bio raw material vinyl monomer, in a predetermined ratio, for example.

### PRIOR ART DOCUMENTS

### PATENT DOCUMENTS

Patent Document 1: JP-A-3-111408
Patent Document 2: JP-A-2005-82687

### SUMMARY OF THE INVENTION

### PROBLEMS TO BE SOLVED BY THE INVENTION

However, according to the techniques of Patent Documents 1 and 2, and further, the conventional method for producing a vinyl polymer using a recycled/bio raw material vinyl monomer and a non-recycled/non-bio raw material vinyl monomer, it may be required to perform a purification step or the like that requires a complicated step for each of the recycled/bio raw material vinyl monomer and the non-recycled/non-bio raw material vinyl monomer before producing a vinyl polymer, and these operations require enormous energy and may require additional costs to be incurred.

### MEANS FOR SOLVING THE PROBLEMS

As a result of intensive studies to solve the above problems, the present inventors have found that the above problems can be solved by a vinyl polymer production device having a predetermined configuration and a method for producing a vinyl polymer using the vinyl polymer production device, thereby completing the present invention.

That is, the present invention provides the following [1] to [14].
[1] A vinyl polymer production device includes:
   a polymerization reaction tank for performing bulk polymerization or solution polymerization of a raw material vinyl monomer containing a recycled/bio raw material vinyl monomer and a non-recycled/non-bio raw material vinyl monomer to obtain a vinyl polymer composition in which a vinyl polymer and an unreacted vinyl monomer are mixed;
   a raw material vinyl monomer supply unit for supplying the vinyl monomer to the polymerization reaction tank, the raw material vinyl monomer supply unit being connected to the polymerization reaction tank by a first pipe having one end connected to the polymerization reaction tank and the other end connected to the raw material vinyl monomer supply unit, and including a non-recycled/non-bio raw material vinyl monomer supply unit for supplying the non-recycled/non-bio raw material vinyl monomer and a raw material vinyl monomer supply pump for deriving the vinyl monomer to the polymerization reaction tank;
   a devolatilization unit for devolatilizing the vinyl polymer composition derived from the polymerization reaction tank to separate a liquid vinyl polymer and a gaseous unreacted vinyl monomer, the devolatilization unit being connected to the polymerization reaction tank by a second pipe having one end connected to the polymerization reaction tank and the other end connected to the devolatilization unit, and having a vinyl polymer composition introduction port for introducing the vinyl polymer composition, a vinyl polymer discharge port for discharging the vinyl polymer, a first unreacted vinyl monomer discharge port for discharging the unreacted vinyl monomer, and a second unreacted vinyl monomer discharge port disposed downstream of the first unreacted vinyl monomer discharge port;
   a purifier for separating and removing an impurity component from the unreacted vinyl monomer derived from the devolatilization unit, the purifier being connected to the devolatilization unit by a third pipe having one end connected to the first unreacted vinyl monomer discharge port and the other end connected to the purifier, and connected to the devolatilization unit by a fourth pipe having one end connected to the second unreacted vinyl monomer discharge port and the other end connected to the purifier; and
   a circulation unit for circulating the unreacted vinyl monomer from which the impurity component is removed by the purifier to the raw material vinyl monomer supply unit, the circulation unit being provided in a fifth pipe having one end connected to the purifier and the other end connected to the raw material vinyl monomer supply unit,
   in which a recycled/bio raw material vinyl monomer supply unit for supplying the recycled/bio raw material vinyl monomer is connected to at least one selected from the group consisting of the raw material vinyl monomer supply unit, the polymerization reaction tank, the purifier, the circulation unit, and the third pipe.
[2] The vinyl polymer production device according to [1], in which the recycled/bio raw material vinyl monomer supply unit is connected to the third pipe.
[3] The vinyl polymer production device according to [1] or [2], in which the devolatilization unit is a devolatilization extruder.
[4] The vinyl polymer production device according to [2], further including
   a first cooling unit provided in a region of the third pipe to which the recycled/bio raw material vinyl monomer input part is connected, the region being closer to the devolatilization unit than the recycled/bio raw material monomer input part,
   in which the first cooling unit is a cooling unit for liquefying the gaseous unreacted vinyl monomer.
[5] The vinyl polymer production device according to any one of [1] to [4], further including a raw material vinyl monomer preparation tank for adjusting a composition of the raw material vinyl monomer supplied to the polymerization reaction tank, the raw material vinyl monomer preparation tank being provided in a region of the fifth pipe in the vicinity of the raw material vinyl monomer supply unit or connected to the raw material vinyl monomer supply unit.
[6] The vinyl polymer production device according to any one of [1] to [5], further including
   a first storage tank for storing the unreacted vinyl monomer derived from the devolatilization unit as a liquid unreacted vinyl monomer, the first storage tank being provided in a region of the fourth pipe in the vicinity of the purifier; and
   a second storage tank for storing the unreacted vinyl monomer derived from the purifier as a liquid unreacted vinyl monomer, the second storage tank being provided in a region of the fifth pipe in the vicinity of the raw material monomer supply unit.
[7] The vinyl polymer production device according to any one of [1] to [6], in which the raw material vinyl monomer and the unreacted vinyl monomer are (meth)acrylic acid esters.
[8] A method for producing a vinyl polymer using the vinyl polymer production device according to any one of [1] to [7], the method including:
   a derivation step of deriving, to the polymerization reaction tank through the first pipe by the raw material vinyl monomer supply pump included in the raw material vinyl monomer supply unit, a raw material vinyl monomer containing a non-recycled/non-bio raw material vinyl monomer supplied from the non-recycled/non-bio raw material vinyl monomer supply unit for supplying a non-recycled/non-bio raw material vinyl monomer and a recycled/bio raw material vinyl monomer supplied from the recycled/bio raw material vinyl monomer supply unit;
   a preparation step of performing bulk polymerization or solution polymerization of the raw material vinyl monomer supplied from the raw material vinyl monomer supply unit in the polymerization reaction tank to obtain a vinyl polymer composition in which a vinyl polymer and an unreacted vinyl monomer are mixed;
   a separation step of deriving the obtained vinyl polymer composition from the polymerization reaction tank, introducing the vinyl polymer composition through the second pipe into the devolatilization unit from the vinyl polymer composition introduction port, and then devolatilizing the vinyl polymer composition by the devolatilization unit to separate a liquid vinyl polymer and a gaseous unreacted vinyl monomer;
   a removal step of further separating and removing an impurity component from the unreacted vinyl monomer by discharging the unreacted vinyl monomer through the first unreacted vinyl monomer discharge port of the devolatilization unit and the third pipe, introducing the unreacted vinyl monomer into the purifier, and purifying the unreacted vinyl monomer;
   a circulation step of deriving the unreacted vinyl monomer from which the impurity component is removed from the purifier, circulating the unreacted vinyl monomer to the raw material vinyl monomer supply unit through the fifth pipe by the circulation unit, and then performing the derivation step again; and
   a discharge step of discharging the vinyl polymer from which the unreacted vinyl monomer is separated from the vinyl polymer discharge port of the devolatilization unit to obtain a vinyl polymer.
[9] The method for producing a vinyl polymer according to [8], in which
   the recycled/bio raw material vinyl monomer supply unit for supplying a recycled/bio raw material vinyl monomer is connected to at least one selected from the group consisting of the raw material vinyl monomer supply unit, the polymerization reaction tank, the purifier, the circulation unit, and the third pipe,
   in a case where the recycled/bio raw material vinyl monomer supply unit is connected to the raw material vinyl monomer supply unit, the derivation step is a step performed using the recycled/bio raw material vinyl monomer supplied from the recycled/bio raw material vinyl monomer supply unit to the raw material vinyl monomer supply unit,
   in a case where the recycled/bio raw material vinyl monomer supply unit is connected to the polymerization reaction tank, the preparation step is a step performed using the recycled/bio raw material vinyl monomer supplied from the recycled/bio raw material vinyl monomer supply unit to the polymerization reaction tank,
   in a case where the recycled/bio raw material vinyl monomer supply unit is connected to the purifier, the removal step is a step performed using the recycled/bio raw material vinyl monomer supplied from the recycled/bio raw material vinyl monomer supply unit to the purifier in addition to the unreacted vinyl monomer,
   in a case where the recycled/bio raw material vinyl monomer supply unit is connected to the circulation unit, the circulation step is a step performed using the recycled/bio raw material vinyl monomer supplied from the recycled/bio raw material vinyl monomer supply unit to the circulation unit in addition to the unreacted vinyl monomer, and
   in a case where the recycled/bio raw material vinyl monomer supply unit is connected to the third pipe, the removal step is a step performed using the recycled/bio raw material vinyl monomer supplied from the recycled/bio raw material vinyl monomer supply unit to the third pipe in addition to the unreacted vinyl monomer derived from the devolatilization unit.
[10] The method for producing a vinyl polymer according to [9], in which
   the recycled/bio raw material vinyl monomer supply unit is connected to the third pipe, and
   the removal step is a step performed using the recycled/bio raw material vinyl monomer supplied from the recycled/bio raw material vinyl monomer supply unit through the third pipe in addition to the unreacted vinyl monomer derived from the devolatilization unit.
[11] The method for producing a vinyl polymer according to [10], further including,
   after the separation step and before the removal step, a cooling step of introducing a gaseous unreacted vinyl monomer derived from the devolatilization unit into a first cooling unit, and cooling and liquefying the gaseous unreacted vinyl monomer, the first cooling unit being further provided in a region of the third pipe to which the recycled/bio raw material vinyl monomer supply unit is connected, the region being closer to the devolatilization unit than the recycled/bio raw material monomer supply unit.
[12] The method for producing a vinyl polymer according to any one of [8] to [11], in which
   the raw material vinyl monomer preparation tank is further provided, the raw material vinyl monomer preparation tank being provided in a region of the fifth pipe in the vicinity of the raw material vinyl monomer supply unit or connected to the raw material vinyl monomer supply unit, and
   the circulation step is a step of introducing an unreacted vinyl monomer from which an impurity component is removed into the raw material vinyl monomer preparation tank by the circulation unit, the unreacted vinyl monomer being derived from the purifier, adjusting a composition of the raw material vinyl monomer, circulating the raw material vinyl monomer having the adjusted composition to the raw material vinyl monomer supply unit, and then performing the derivation step again.
[13] The method for producing a vinyl polymer according to any one of [8] to [12], further including,
   after the separation step and before the removal step, a step of storing the unreacted vinyl monomer derived from the devolatilization unit in a first storage tank as a liquid unreacted vinyl monomer,
   in which the circulation step is a step of deriving an unreacted vinyl monomer from which an impurity component is removed from the purifier, storing the unreacted vinyl monomer as a liquid unreacted vinyl monomer in a second storage tank, circulating the unreacted vinyl monomer to the raw material vinyl monomer supply unit, and then performing the derivation step again, and
   the first storage tank provided in a region of the fourth pipe in the vicinity of the purifier, and the second storage tank provided in a region of the fifth pipe in the vicinity of the raw material vinyl monomer supply unit are further provided.
[14] The method for producing a vinyl polymer according to any one of [8] to [13], in which the raw material vinyl monomer and the unreacted vinyl monomer are (meth)acrylic acid esters.

### EFFECT OF THE INVENTION

According to the vinyl polymer production device of the present invention and the method for producing a vinyl polymer using the vinyl polymer production device, it is possible to efficiently produce a vinyl polymer derived from a recycled/bio raw material vinyl monomer and a non-recycled/non-bio raw material vinyl monomer, particularly a vinyl polymer to which a mass balance system is applied, while reducing energy consumption, in a simple process, and to further reduce production costs of the vinyl polymer.

### BRIEF DESCRIPTION OF THE DRAWINGS

Fig. 1 is a schematic view illustrating a configuration example of a vinyl polymer production device of a first embodiment.
Fig. 2 is a schematic view illustrating a configuration example of a vinyl polymer production device of a second embodiment.

### MODE FOR CARRYING OUT THE INVENTION

Hereinafter, embodiments of the present invention will be specifically described with reference to the drawings. Note that each drawing merely schematically illustrates the shape, size, and arrangement of constituent elements to the extent that the invention can be understood. The present invention is not limited by the following description, and each constituent element can be modified without departing from the gist of the present invention. In the plurality of drawings, redundant descriptions of reference numerals used for the same constituent elements may be omitted.

### <First embodiment>

### 1. Vinyl polymer production device

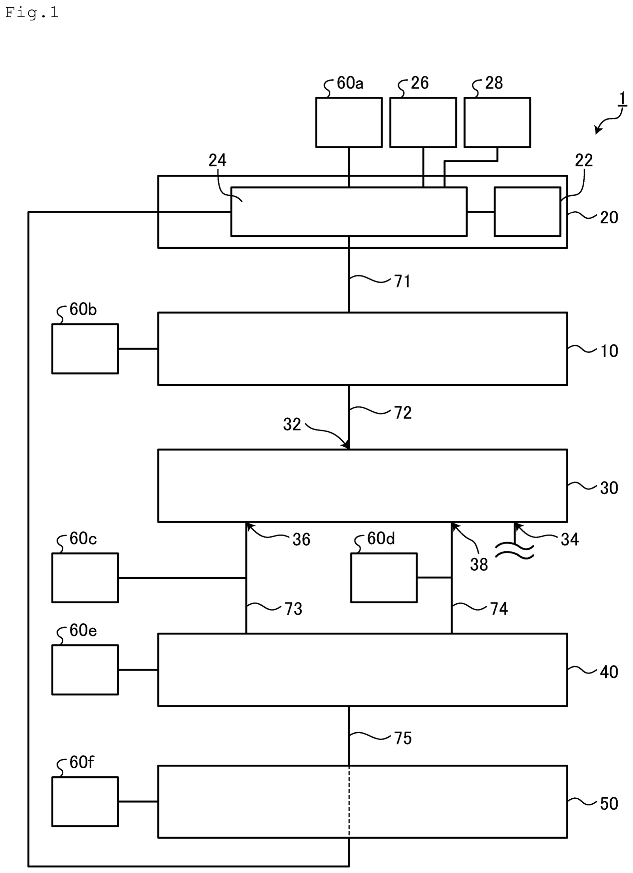

A vinyl polymer production device according to a first embodiment will be described with reference to Fig. 1. Fig. 1 is a schematic view illustrating a configuration example of the vinyl polymer production device of the first embodiment.

As illustrated in Fig. 1, a vinyl polymer production device 1 of the first embodiment includes:
a polymerization reaction tank 10 for performing bulk polymerization or solution polymerization of a raw material vinyl monomer containing a recycled/bio raw material vinyl monomer and a non-recycled/non-bio raw material vinyl monomer to obtain a vinyl polymer composition in which a vinyl polymer and an unreacted vinyl monomer are mixed;
a raw material vinyl monomer supply unit 20 for supplying the vinyl monomer to the polymerization reaction tank 10, the raw material vinyl monomer supply unit 20 being connected to the polymerization reaction tank 10 by a first pipe 71 having one end connected to the polymerization reaction tank 10 and the other end connected to the raw material vinyl monomer supply unit 20, and including a non-recycled/bio raw material vinyl monomer supply unit 22 for supplying the non-recycled/non-bio raw material vinyl monomer and a raw material vinyl monomer supply pump 24 for deriving the vinyl monomer to the polymerization reaction tank 10;
a devolatilization unit 30 for devolatilizing the vinyl polymer composition derived from the polymerization reaction tank 10 to separate a liquid vinyl polymer and a gaseous unreacted vinyl monomer, the devolatilization unit 30 being connected to the polymerization reaction tank 10 by a second pipe 72 having one end connected to the polymerization reaction tank 10 and the other end connected to the devolatilization unit 30, and having a vinyl polymer composition introduction port 32 for introducing the vinyl polymer composition, a vinyl polymer discharge port 34 for discharging the produced vinyl polymer, a first unreacted vinyl monomer discharge port 36 for discharging the unreacted vinyl monomer, and a second unreacted vinyl monomer discharge port 38 disposed downstream of the first unreacted vinyl monomer discharge port 36;
a purifier 40 for separating and removing an impurity component from the unreacted vinyl monomer derived from the devolatilization unit 30, the purifier 40 being connected to the devolatilization unit 30 by a third pipe 73 having one end connected to the first unreacted vinyl monomer discharge port 36 and the other end connected to the purifier 40, and connected to the devolatilization unit 30 by a fourth pipe 74 having one end connected to the second unreacted vinyl monomer discharge port 38 and the other end connected to the purifier 40; and
a circulation unit 50 for circulating the unreacted vinyl monomer from which the impurity component is removed by the purifier 40 to the raw material vinyl monomer supply unit 20, the circulation unit being provided in a fifth pipe 75 having one end connected to the purifier 40 and the other end connected to the raw material vinyl monomer supply unit 20,
in which a recycled/bio raw material vinyl monomer supply unit 60 for supplying the recycled/bio raw material vinyl monomer is connected to at least one selected from the group consisting of the raw material vinyl monomer supply unit 20, the polymerization reaction tank 10, the purifier 40, the circulation unit 50, the third pipe 73, and the fourth pipe 74.

### Description of terms

Here, first, terms used in the present specification will be described.

The "vinyl monomer" is a monomer having a vinyl group. Examples of the vinyl monomer include a methacrylic acid ester such as cyclohexyl methacrylate, benzyl methacrylate, 2-ethylhexyl methacrylate, 2-hydroxyethyl methacrylate, hydroxypropyl methacrylate, or monoglycerol methacrylate; an acrylic acid ester such as methyl acrylate, ethyl acrylate, propyl acrylate, butyl acrylate, 2-ethylhexyl acrylate, 2-hydroxyethyl acrylate, 2-hydroxypropyl acrylate, or monoglycerol acrylate; an unsaturated carboxylic acid such as acrylic acid, methacrylic acid, maleic acid, itaconic acid, maleic anhydride, or itaconic anhydride, or an acid anhydride thereof; a nitrogen-containing monomer such as acrylamide, methacrylamide, acrylonitrile, methacrylonitrile, diacetone acrylamide, or dimethylaminoethyl methacrylate; an epoxy group-containing monomer such as allyl glycidyl ether, glycidyl acrylate, or glycidyl methacrylate; and a styrene-based monomer such as styrene or α-methylstyrene.

The "vinyl polymer" is a polymer containing a monomer unit (residue) derived from the monomer having a vinyl group.

The "vinyl polymer composition" is a composition containing the vinyl polymer as a main component and may further contain other components.

The "(meth)acrylic polymer" is a polymer containing a monomer unit derived from a monomer having a (meth)acrylic group.

The "(meth)acrylic" includes acrylic, methacrylic, and a combination thereof.

The "(meth)acrylic polymer composition" is a composition containing a (meth)acrylic polymer as a main component and may further contain other components.

Examples of the "(meth)acrylic acid ester" include methyl methacrylate, ethyl (meth)acrylate, propyl (meth)acrylate, butyl (meth)acrylate, isopropyl (meth)acrylate, cyclohexyl (meth)acrylate, phenyl (meth)acrylate, (2-ethylhexyl) (meth)acrylate, (tert-butylcyclohexyl) (meth)acrylate, benzyl (meth)acrylate, and (2,2,2-trifluoroethyl) (meth)acrylic acid.

The "(meth)acrylic polymer" is a polymer containing a monomer unit derived from a monomer having a (meth)acrylic group.

Here, examples of the (meth)acrylic polymer include a (meth)acrylic homopolymer containing only a monomer unit derived from alkyl (meth)acrylate having an alkyl group having 1 to 4 carbon atoms; and a (meth)acrylic copolymer having 85 mass% or more and less than 100 mass% of a monomer unit derived from alkyl (meth)acrylate having an alkyl group having 1 to 4 carbon atoms, and more than 0 mass% and 15 mass% or less of a monomer unit derived from another vinyl monomer copolymerizable with a monomer unit derived from alkyl (meth)acrylate having an alkyl group having 1 to 4 carbon atoms.

The "alkyl (meth)acrylate having an alkyl group having 1 to 4 carbon atoms" is, for example, a compound represented by CH₂=C(CH₃)COOR (R is an alkyl group having 1 to 4 carbon atoms).

The vinyl monomer copolymerizable with alkyl (meth)acrylate having an alkyl group having 1 to 4 carbon atoms is copolymerizable with an alkyl methacrylate having an alkyl group having 1 to 4 carbon atoms, and is a monomer having a vinyl group.

Examples of the alkyl (meth)acrylate having an alkyl group having 1 to 4 carbon atoms include methyl methacrylate, ethyl methacrylate, n-propyl methacrylate, isopropyl methacrylate, n-butyl methacrylate, tert-butyl methacrylate, sec-butyl methacrylate, and isobutyl methacrylate. The alkyl methacrylate having an alkyl group having 1 to 4 carbon atoms is preferably methyl methacrylate.

Examples of the vinyl monomer copolymerizable with alkyl (meth)acrylate having an alkyl group having 1 to 4 carbon atoms include a methacrylic acid ester (excluding alkyl methacrylate having an alkyl group having 1 to 4 carbon atoms) such as cyclohexyl methacrylate, benzyl methacrylate, 2-ethylhexyl methacrylate, 2-hydroxyethyl methacrylate, hydroxypropyl methacrylate, or monoglycerol methacrylate; an acrylic acid ester such as methyl acrylate, ethyl acrylate, propyl acrylate, butyl acrylate, 2-ethylhexyl acrylate, 2-hydroxyethyl acrylate, 2-hydroxypropyl acrylate, or monoglycerol acrylate; an unsaturated carboxylic acid such as acrylic acid, methacrylic acid, maleic acid, itaconic acid, maleic anhydride, or itaconic anhydride, or an acid anhydride thereof; a nitrogen-containing monomer such as acrylamide, methacrylamide, acrylonitrile, methacrylonitrile, diacetone acrylamide, or dimethylaminoethyl methacrylate; an epoxy group-containing monomer such as allyl glycidyl ether, glycidyl acrylate, or glycidyl methacrylate; and a styrene-based monomer such as styrene or α-methylstyrene.

Examples of a method for producing the vinyl polymer ((meth)acrylic polymer) include bulk polymerization, solution polymerization, suspension polymerization, and emulsion polymerization, in which alkyl (meth)acrylate having an alkyl group having 1 to 4 carbon atoms and, as necessary, another vinyl monomer copolymerizable with alkyl (meth)acrylate having an alkyl group having 1 to 4 carbon atoms are polymerized.

Examples of the "other components" that can be contained in the vinyl polymer composition ((meth)acrylic polymer composition) include any suitable conventionally known release agent, polymerization modifier, polymerization initiator, ultraviolet absorber, and colorant that can be added to produce a molded body having predetermined characteristics.

The "scrap" is a used molded body that is usually produced by molding a vinyl polymer composition into various shapes by a conventionally known arbitrary suitable injection molding process or the like, is used for a predetermined application, and then is recovered as a waste material, and is adjusted to a shape and a size that can be used as a raw material in the present invention. In addition, the "scrap" may be a molded body in which a defective product during molding is recovered and adjusted to a shape and a size that can be used as a raw material in the present invention, or may be a molded body in which an end material generated during molding or in a post-process such as polishing is recovered and adjusted to a shape and a size that can be used as a raw material.

The "impurity component" means, for example, a component containing, as a main component, impurities that may include a low-boiling-point impurity and a high-boiling-point impurity.

The "low-boiling-point impurity" is an impurity mainly composed of an impurity having a boiling point lower than that of the vinyl monomer to be used, and means, for example, an impurity containing a compound having a boiling point in a range of, for example, 50°C to 100°C at atmospheric pressure in a case where the vinyl monomer is methyl methacrylate. Specific examples of the low-boiling-point impurity include methanol, methyl acrylate, methyl isobutyrate, and methyl propionate.

The "high-boiling-point impurity" means an impurity mainly composed of an impurity having a boiling point higher than that of the vinyl monomer to be used and containing a compound having a boiling point in a range of, for example, 102°C to 450°C at atmospheric pressure, and examples of the high-boiling-point impurity include a dye, a dimer of a thermally decomposed vinyl monomer, and a trimer of a thermally decomposed vinyl monomer. Here, the high-boiling-point impurity is mainly a component derived from a coloring component contained in the scrap, and for example, in a case where the (meth)acrylic acid ester is methyl methacrylate, the high-boiling-point impurity specifically include, for example, styrene, toluene, 1-butanol, dimethyl 2-methylene-5-methylhexanedioate, and dimethyl 2-methoxymethyl-2,4-dimethylglutarate.

Hereinafter, constituent elements that can constitute the vinyl polymer production device 1 of the present embodiment will be specifically described.

### (1) Polymerization reaction tank

The polymerization reaction tank 10 is a functional unit for performing bulk polymerization or solution polymerization of a raw material vinyl monomer containing a recycled/bio raw material vinyl monomer, a non-recycled/non-bio raw material vinyl monomer, and a recovered unreacted vinyl monomer to produce a vinyl polymer composition in which a vinyl polymer is mixed with an unreacted vinyl monomer, that is, an unreacted vinyl monomer that can be derived from any of a recycled/bio raw material vinyl monomer, a non-recycled/non-bio raw material vinyl monomer, and a recovered unreacted vinyl monomer.

As the polymerization reaction tank 10, for example, a tank type reactor or a tube type reactor equipped with a stirring unit (not illustrated) can be used, and the stirring unit is preferably a functional unit having performance capable of uniformly mixing the raw material vinyl monomer and the reactant supplied to the polymerization reaction tank 10.

In addition, the polymerization reaction tank 10 may include a temperature control unit (not illustrated) capable of controlling a temperature (polymerization temperature) in the polymerization reaction tank 10 to a predetermined temperature by cooling or heating as necessary. The temperature control range by the temperature control unit can be, for example, any suitable range determined in consideration of the type of raw material monomers to be used, the blending ratio, other components, and the like.

The control of the temperature by the temperature control unit can be performed by any suitable conventionally known method. As the temperature control unit that can be included in the polymerization reaction tank 10, any suitable conventionally known configuration can be applied. Specifically, at least one selected from the group consisting of a jacket, a double-pipe heat exchanger, an electric heater, and a heat insulating material capable of circulating a medium (a heat medium or a cold medium) therein can be applied as the temperature control unit.

### (2) Raw material vinyl monomer supply unit

The raw material vinyl monomer supply unit 20 is a functional unit capable of supplying the non-recycled/non-bio raw material vinyl monomer to the polymerization reaction tank 10. Note that, although details will be described below, the raw material vinyl monomer supply unit 20 is configured to be able to supply the recycled/bio raw material vinyl monomer, and further the unreacted vinyl monomer as well as the non-recycled/non-bio raw material vinyl monomer to the polymerization reaction tank 10.

The raw material vinyl monomer supply unit 20 includes the non-recycled/non-bio raw material vinyl monomer supply unit 22 and the raw material monomer supply pump 24 provided in the non-recycled/non-bio raw material vinyl monomer supply unit 22. The non-recycled/non-bio raw material vinyl monomer supply unit 22 and the raw material monomer supply pump 24 may be integrally configured.

The non-recycled/non-bio raw material vinyl monomer supply unit 22 is a functional unit capable of supplying a non-recycled/non-bio raw material vinyl monomer (virgin vinyl monomer) introduced from the outside to the raw material monomer supply pump 24. As the non-recycled/non-bio raw material vinyl monomer supply unit 22, any suitable equipment including a conventionally known tank, column, tank, vessel, and the like can be used.

Note that, the raw material monomer supply pump 24 is a functional unit capable of supplying the non-recycled/non-bio raw material vinyl monomer supplied from the non-recycled/non-bio raw material vinyl monomer supply unit 22, further, a recycled/bio raw material vinyl monomer to be described below, and further, the unreacted vinyl monomer to the polymerization reaction tank 10. As the raw material monomer supply pump 24, any suitable conventionally known configuration such as a metering pump such as a plunger pump or a diaphragm pump can be adopted.

The raw material vinyl monomer supply unit 20 (raw material monomer supply pump 24) is connected to the polymerization reaction tank 10 by the first pipe 71 having one end connected to the polymerization reaction tank 10 and the other end connected to the raw material vinyl monomer supply unit 20.

As the first pipe 71, for example, any suitable conventionally known pipe formed of stainless steel can be applied.

Here, the raw material vinyl monomer and the unreacted vinyl monomer used in the present invention are preferably (meth)acrylic acid esters, and more preferably methyl methacrylate.

As illustrated in Fig. 1, the vinyl polymer production device 1 may further include a polymerization initiator supply unit 26 and a chain transfer agent supply unit 28 connected to the raw material monomer supply pump 24 described above.

The polymerization initiator supply unit 26 is a functional unit capable of supplying any suitable conventionally known polymerization initiator corresponding to the selected vinyl monomer to the polymerization reaction tank 10 through the raw material monomer supply pump 24 described above.

As the polymerization initiator supply unit 26, any suitable conventionally known equipment including a tank, a column, a tank, a vessel, and a metering pump such as a plunger pump or a diaphragm pump can be used.

In a case where the vinyl polymer production device 1 includes the polymerization initiator supply unit 26, the raw material monomer supply pump 24 is configured as a functional unit capable of supplying a polymerization initiator to the polymerization reaction tank 10 in addition to the non-recycled/non-bio raw material vinyl monomer, the recycled/bio raw material vinyl monomer, and the unreacted vinyl monomer.

In the illustrated example, although the configuration example in which the polymerization initiator supply unit 26 is connected to the raw material monomer supply pump 24 has been described, the polymerization initiator supply unit 26 may be connected to the polymerization reaction tank 10 so that the polymerization initiator can be directly supplied to the polymerization reaction tank 10.

In a case where the vinyl polymer production device 1 includes the polymerization initiator supply unit 26 connected to the raw material monomer supply pump 24, when supplying the polymerization initiator, from the viewpoint of preventing polymerization of the vinyl monomer (the raw material vinyl monomer and the unreacted vinyl monomer) in the raw material monomer supply pump 24, it is preferable to supply the polymerization initiator under a condition in which the vinyl monomer is not polymerized, that is, for example, a temperature condition is set to be lower than the polymerization temperature.

The chain transfer agent supply unit 28 is a functional unit capable of supplying any suitable conventionally known chain transfer agent corresponding to the selected vinyl monomer to the polymerization reaction tank 10 through the raw material monomer supply pump 24 described above.

As the chain transfer agent supply unit 28, any suitable conventionally known equipment including a tank, a column, a tank, a vessel, and a metering pump such as a plunger pump or a diaphragm pump can be used.

In a case where the vinyl polymer production device 1 includes the chain transfer agent supply unit 28, the raw material monomer supply pump 24 is configured as a functional unit capable of supplying a chain transfer agent to the polymerization reaction tank 10 in addition to the non-recycled/non-bio raw material vinyl monomer, the recycled/bio raw material vinyl monomer, and the unreacted vinyl monomer.

In the illustrated example, although the configuration example in which the chain transfer agent supply unit 28 is connected to the raw material monomer supply pump 24 has been described, the chain transfer agent supply unit 28 may be connected to the polymerization reaction tank 10 so that the chain transfer agent can be directly supplied to the polymerization reaction tank 10.

### (3) Devolatilization unit

The vinyl polymer production device 1 includes the devolatilization unit 30. The devolatilization unit 30 is a functional unit having a function of devolatilizing the vinyl polymer composition derived from the polymerization reaction tank 10 described above and separating a liquid vinyl polymer and a gaseous unreacted vinyl monomer (containing other impurity components). As the devolatilization unit 30, a device or the like having any suitable conventionally known configuration can be applied under the condition of having the above function.

Examples of the devolatilization unit 30 include an extruder including a devolatilization extruder, a thin film evaporator, an evaporator, a multi-tube heat exchanger, and a special heat exchanger.

The devolatilization unit 30 is preferably a devolatilization extruder. Suitable examples of the devolatilization extruder serving as the devolatilization unit 30 include twin-screw extruders such as a twin-screw co-rotating extruder and a twin-screw counter-rotating extruder. Specific examples of the devolatilization extruder include a vent extractor type devolatilization extruder such as TEX (trade name) manufactured by The Japan Steel Works, LTD.

Hereinafter, a configuration example of the devolatilization unit 30 will be described by taking a configuration of a twin-screw extruder as an example.

The devolatilization unit 30 in the case of a twin-screw extruder includes a cylinder for performing a heat treatment inside the cylinder while moving the vinyl polymer composition prepared in the polymerization reaction tank 10 in an extending direction (a substantially horizontal direction) in the twin-screw extruder, and a screw disposed inside the cylinder.

As illustrated in Fig. 1, the devolatilization unit 30 is provided with the vinyl polymer composition introduction port 32 for supplying the vinyl polymer composition into the devolatilization unit 30. The vinyl polymer composition introduction port 32 has a configuration corresponding to a feeder in a twin-screw extruder. The feeder serving as the vinyl polymer composition introduction port 32 is usually provided in the vicinity of the upstream end of the cylinder so as to be able to supply the vinyl polymer composition into the cylinder.

The devolatilization unit 30 is provided with one or more unreacted vinyl monomer discharge ports for extracting a gas containing an unreacted vinyl monomer produced by being separated into a liquid vinyl polymer and a gaseous unreacted vinyl monomer by a devolatilization treatment and an impurity component that can be inevitably contained outside the devolatilization unit 30. The arrangement (position) of the one or more unreacted vinyl monomer discharge ports is not particularly limited, and may be any suitable arrangement corresponding to the design. For example, from the viewpoint of improving the extraction efficiency of the gas generated in the devolatilization unit 30, the unreacted vinyl monomer discharge port is preferably provided in the vicinity of the downstream end of the devolatilization unit 30 on the opposite side of the vinyl polymer composition introduction port 32 described above and on the upper end side of the devolatilization unit 30. In a case where two or more unreacted vinyl monomer discharge ports are provided, the unreacted vinyl monomer discharge ports are preferably arranged so as to be aligned at predetermined intervals (for example, equal intervals) on the upper end side of the devolatilization unit 30.

The devolatilization unit 30 is provided with the vinyl polymer discharge port 34 for discharging the produced vinyl polymer to the outside of the devolatilization unit 30. The vinyl polymer discharge port 34 is usually provided in the vicinity of the terminal portion on the downstream side of the devolatilization unit 30.

Hereinafter, as illustrated in Fig. 1, an aspect in which the devolatilization unit 30 includes the first unreacted vinyl monomer discharge port 36 and the second unreacted vinyl monomer discharge port 38 disposed downstream of the first unreacted vinyl monomer discharge port 36 will be described as an example.

The first unreacted vinyl monomer discharge port 36 is disposed on the upstream side of the devolatilization unit 30, that is, near the terminal portion on the side opposite to the terminal portion on the downstream side where the vinyl polymer discharge port 34 is provided. Note that the first unreacted vinyl monomer discharge port 36 may be referred to as an upstream unreacted vinyl monomer discharge port 36.

The second unreacted vinyl monomer discharge port 38 is disposed downstream of the devolatilization unit 30, that is, near the vinyl polymer discharge port 34. Note that the second unreacted vinyl monomer discharge port 38 may be referred to as an upstream unreacted vinyl monomer discharge port 38.

Here, the gas containing the unreacted vinyl monomer derived from the first unreacted vinyl monomer discharge port 36 disposed on the more upstream side can contain a large amount of low-boiling-point impurities having a lower boiling point as impurity components. On the other hand, the gas containing the unreacted vinyl monomer derived from the second unreacted vinyl monomer discharge port 38 disposed on the further downstream side can contain a large amount of high-boiling-point impurities having a higher boiling point as impurity components.

The devolatilization unit 30 is connected to the polymerization reaction tank 10 by the second pipe 72 having one end connected to the polymerization reaction tank 10 and the other end connected to the devolatilization unit 30. The second pipe 72 is a pipe for deriving the vinyl polymer composition prepared in polymerization reaction tank 10 from polymerization reaction tank 10 and further introducing the vinyl polymer composition into the devolatilization unit 30.

The shape, size, constituent material, and the like of the second pipe 72 are not particularly limited provided that the function described above can be realized. The second pipe 72 may usually include any suitable conventionally known pump, on-off valve, flow meter, preheater, and the like (not illustrated) in order to ensure the circulation of the vinyl polymer composition. As the second pipe 72, for example, any suitable conventionally known pipe formed of stainless steel can be applied.

### (4) Purifier

The vinyl polymer production device 1 includes the purifier 40. The purifier 40 is a functional unit for separating and removing an impurity component (particularly a high-boiling-point impurity) from the unreacted vinyl monomer derived from the devolatilization unit 30 described above other than the unreacted vinyl monomer. The unreacted vinyl monomer derived from the devolatilization unit 30 may inevitably contain an impurity component in addition to the unreacted vinyl monomer.

As the purifier 40, a rectification column (distillation column) having any suitable conventionally known configuration can be applied. Examples of a suitable rectification column for the purifier 40 include multistage rectification columns.

The shape, size, and material of the rectification column which is the purifier 40 are not particularly limited. The shape, size, and material of the rectification column can be selected in consideration of, for example, the component, amount, and purification ability of the unreacted vinyl monomer derived from the devolatilization unit 30 to be treated. Examples of preferred materials for the rectification column include stainless steel.

The purifier 40 is connected to the devolatilization unit 30 by the third pipe 73 having one end connected to the first unreacted vinyl monomer discharge port 36 of the devolatilization unit 30 and the other end connected to the purifier 40 and the fourth pipe 74 having one end connected to the second unreacted vinyl monomer discharge port 38 and the other end connected to the purifier 40.

The shape, size, constituent material, and the like of the third pipe 73 and the fourth pipe 74 are not particularly limited provided that the unreacted vinyl monomer can be derived from the devolatilization unit 30 and introduced into the purifier 40.

The third pipe 73 and the fourth pipe 74 may include any suitable conventionally known pump, on-off valve, flow meter, and the like (not illustrated) in order to perform the function described above. As the third pipe 73 and the fourth pipe 74, for example, any suitable conventionally known pipe formed of stainless steel can be applied.

Here, examples of the impurity component that can be removed by the purifier 40 include high-boiling-point impurities derived from a dimer of a vinyl monomer, a trimer of a vinyl monomer, a chain transfer agent that can be used, an inert solvent, a reactant or a decomposition product of a vinyl monomer, and the like.

### (5) Circulation unit

The vinyl polymer production device 1 includes the circulation unit 50. The circulation unit 50 is a functional unit for circulating the unreacted vinyl monomer from which the impurity component is removed by the purifier 40 described above to the raw material vinyl monomer supply unit 20 (raw material monomer supply pump 24) described above.

The circulation unit 50 is not particularly limited as long as it can exhibit the above function, and any suitable conventionally known configuration can be adopted. As the circulation unit 50, for example, any suitable conventionally known tank, and equipment including a metering pump such as a plunger pump and a diaphragm pump, and a temperature control unit such as an on-off valve, a flow meter, a thermometer, or a cooler can be used.

The circulation unit 50 is provided in the fifth pipe 75 having one end connected to the purifier 40 and the other end connected to the circulation unit 50. As the fifth pipe 75, for example, any suitable conventionally known pipe formed of stainless steel can be applied. The fifth pipe 75 may include a cooling unit (not illustrated) similar to the first cooling unit 73a and the second cooling unit 74a described above.

### (6) Recycled/bio raw material vinyl monomer supply unit

The recycled/bio raw material vinyl monomer supply units 60, that is, a first recycled/bio raw material vinyl monomer supply unit 60a, a second recycled/bio raw material vinyl monomer supply unit 60b, a third recycled/bio raw material vinyl monomer supply unit 60c, a fourth recycled/bio raw material vinyl monomer supply unit 60d, a fifth recycled/bio raw material vinyl monomer supply unit 60e, and a sixth recycled/bio raw material vinyl monomer supply unit 60f have respective configurations in which a recycled/bio raw material vinyl monomer introduced from the outside is connected to a subsequent stage, that is, functional units capable of supplying the externally introduced recycled/bio raw material vinyl monomer to the raw material monomer pump 24 to which the first recycled/bio raw material vinyl monomer supply unit 60a is connected, the polymerization reaction tank 10 to which the second recycled/bio raw material vinyl monomer supply unit 60b is connected, the third pipe 73 to which the third recycled/bio raw material vinyl monomer supply unit 60c is connected, the fourth pipe 74 to which the fourth recycled/bio raw material vinyl monomer supply unit 60d is connected, the purifier 40 to which the fifth recycled/bio raw material vinyl monomer supply unit 60e is connected, and the circulation unit 50 to which the sixth recycled/bio raw material vinyl monomer supply unit 60f is connected.

In the vinyl polymer production device 1, at least one selected from the group consisting of the first recycled/bio raw material vinyl monomer supply unit 60a, the second recycled/bio raw material vinyl monomer supply unit 60b, the third recycled/bio raw material vinyl monomer supply unit 60c, the fourth recycled/bio raw material vinyl monomer supply unit 60d, the fifth recycled/bio raw material vinyl monomer supply unit 60e, and the sixth recycled/bio raw material vinyl monomer supply unit 60f may be provided.

From the viewpoint that impurities can be removed by the purifier, the recycled/bio raw material vinyl monomer supply unit 60 is preferably connected to one or both of the third pipe 73 and the fourth pipe 74, and is preferably connected to the fourth pipe 74. In other words, the vinyl polymer production device 1 preferably includes the third recycled/bio raw material vinyl monomer supply unit 60c and/or the fourth recycled/bio raw material vinyl monomer supply unit 60d, and more preferably includes the fourth recycled/bio raw material vinyl monomer supply unit 60d.

When the recycled/bio raw material vinyl monomer supply unit 60 includes the fifth recycled/bio raw material vinyl monomer supply unit 60e, the devolatilization unit 30 and the purifier 40 can be continuously operated with a simpler configuration without providing the cooling unit 74a in the fourth pipe 74 connected to the devolatilization unit 30.

As the recycled/bio raw material vinyl monomer supply unit 60, for example, any suitable conventionally known tank, and further, equipment including a metering pump such as a plunger pump or a diaphragm pump, an on-off valve, a meter such as a flow meter, a thermometer, or a pressure gauge, a temperature control unit such as a cooler, a heater, or a heat exchanger, and the like can be used.

The recycled/bio raw material vinyl monomer supply unit 60 may be connected to a predetermined functional unit in a subsequent stage by, for example, any suitable conventionally known stainless steel pipe.

Note that, in a case where the recycled/bio raw material vinyl monomer applied to the vinyl polymer production device 1 is, for example, a recycled raw material vinyl monomer recycled by chemical recycling, a thermal decomposition device capable of producing (recycling) and supplying the recycled raw material vinyl monomer is connected to the recycled/bio raw material vinyl monomer supply unit 60 by, for example, a stainless steel pipe or the like (details of the thermal decomposition device will be described below).

On the other hand, in a case where the recycled/bio raw material vinyl monomer applied to the vinyl polymer production device 1 is, for example, a bio raw material vinyl monomer, a bio raw material vinyl monomer produced in any suitable conventionally known bio raw material vinyl monomer production plant may be supplied to the recycled/bio raw material vinyl monomer supply unit 60, and the bio vinyl monomer production plant and the recycled/bio raw material vinyl monomer supply unit 60 may be connected by, for example, a stainless steel pipe or the like, so that the bio raw material vinyl monomer derived from the bio vinyl monomer production plant may be directly supplied to the recycled/bio raw material vinyl monomer supply unit 60.

### (7) Storage tank (first storage tank or second storage tank)

In the present embodiment, the vinyl polymer production device 1 includes a storage tank 90 (a first storage tank 92 and/or a second storage tank 94).

The storage tank 90 is a functional unit capable of temporarily storing a predetermined amount of components such as an introduced undecomposed monomer and further deriving the components to the functional unit in a subsequent stage as necessary. Specifically, the first storage tank 92 is a functional unit capable of further storing the raw material vinyl monomer derived from the devolatilization unit 30 and liquefied by the second cooling unit 74a as necessary, and further the recycled/bio raw material vinyl monomer supplied from the fourth recycled/bio raw material vinyl monomer supply unit 60d in a case where the fourth recycled/bio-raw material vinyl monomer supply unit 60d is provided, and the second storage tank 94 is a functional unit capable of storing the undecomposed monomer derived from the purifier 40 and introduced by the fifth pipe 75 and the circulation unit 50.

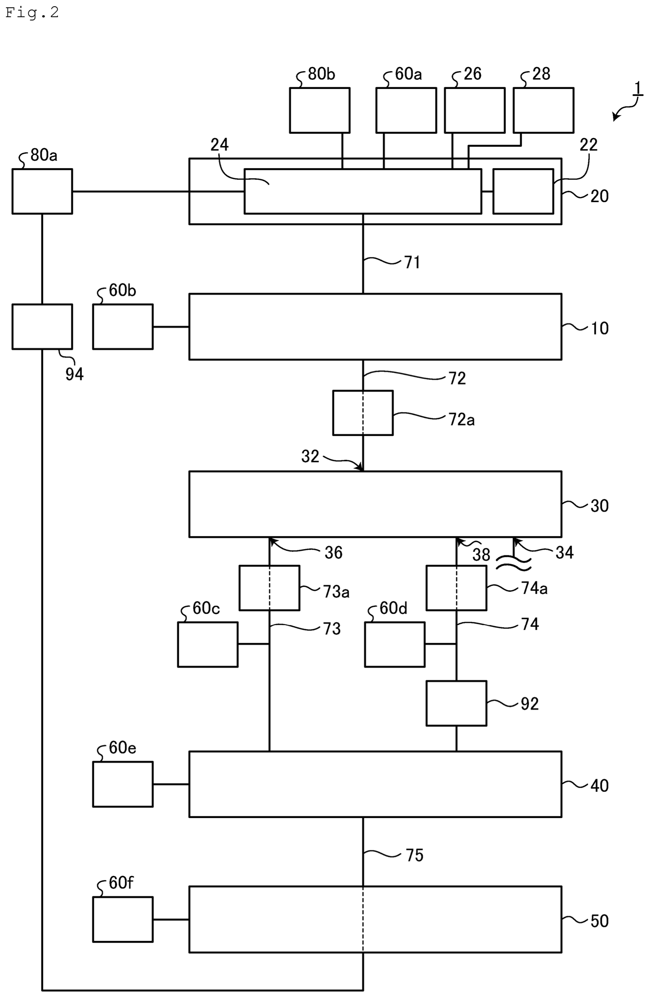

As illustrated in Fig. 2, in the present embodiment, the first storage tank 92 is provided in a region of the fourth pipe 74 closer to the purifier 40 (downstream side) than the second cooling unit 74a. In addition, the second storage tank 94 is provided in a region of the fifth pipe 75 in the vicinity of the raw material vinyl monomer supply unit 20 (raw material monomer supply pump 24) and closer to the purifier 40 than the first raw material vinyl preparation tank 80a.

The configuration, material, size, and the like of the storage tank 90 are not particularly limited as long as the above function can be exhibited. The storage tank 90 can be constituted by, for example, any suitable conventionally known stainless steel tank, and further equipment including a metering pump such as a plunger pump or a diaphragm pump, an on-off valve, a meter such as a flow meter, a thermometer, or a pressure gauge, a temperature control unit such as a cooler, a heater, or a heat exchanger, and the like.

Here, as the fourth pipe 74, for example, any suitable conventionally known pipe formed of stainless steel can be applied.

### (8) Other equipment

### (i) Post-treatment device

The vinyl polymer discharge port 34 of the devolatilization unit 30 is provided with a post-treatment device (not shown) capable of including any conventionally known suitable equipment or the like such as a strand cutter, a dryer, or a silo for drying, storing, and commercializing the produced and discharged vinyl polymer as any suitable aspect such as a strand (filament) form, a sheet form, a flat plate form, or a pellet form.

### (ii) Exhaust gas treatment device

The purifier 40 is provided with an exhaust gas extraction unit (not illustrated), and an exhaust gas treatment device (not illustrated) for treating and detoxifying an exhaust gas extracted after being separated from the undecomposed monomer in the purifier 40 can be connected by, for example, a stainless steel pipe or the like. As an example of the exhaust gas treatment device, it is preferable to apply an exhaust gas treatment device including at least one selected from the group consisting of an acid treatment machine, an amine treatment machine, and a dehydrating desulfurizer.

### (iii) Thermal decomposition device

In a case where the recycled/bio raw material vinyl monomer applied to the vinyl polymer production device 1 is a recycled raw material vinyl monomer, a thermal decomposition device (not illustrated) capable of producing (recycling) and supplying the recycled raw material vinyl monomer is connected to the recycled/bio raw material vinyl monomer supply unit 60 by, for example, a stainless steel pipe or the like. Hereinafter, a thermal decomposition device for chemical recycling which can be suitably applied to the vinyl polymer production device 1 of the present invention will be described.

A thermal decomposition device capable of directly supplying a recycled raw material vinyl monomer, which is a recycled/bio raw material vinyl monomer, to the recycled/bio raw material vinyl monomer supply unit 60 of the vinyl polymer production device 1 of the present invention includes a thermal decomposition unit.

As the thermal decomposition unit, a device having any suitable conventionally known configuration can be applied under conditions in which a gas containing a vinyl monomer such as a (meth)acrylic acid ester (may further contain an impurity component) can be generated by thermally decomposing scrap of a molded body obtained by molding a vinyl polymer composition containing a vinyl polymer.

Examples of the thermal decomposition unit include an extruder, a kneader, and a fluidized bed heater.

The thermal decomposition unit is preferably an extruder. Suitable examples of the extruder serving as the thermal decomposition unit include twin-screw extruders such as a twin-screw co-rotating extruder and a twin-screw counter-rotating extruder.

Examples of the kneader that can be suitably applied as the thermal decomposition unit include the device described in US 10301235.

Examples of the fluidized bed heater that can be suitably applied as the thermal decomposition unit include the device described in JP-A-2009-112902.

Hereinafter, a configuration example of the thermal decomposition unit will be described by taking a configuration of a twin-screw extruder as an example.

The thermal decomposition unit in the case of a twin-screw extruder includes a cylinder for performing a heat treatment inside the cylinder while moving scrap as an introduced raw material in an extending direction in the twin-screw extruder, and a screw disposed inside the cylinder.

The thermal decomposition unit is provided with an input unit corresponding to a hopper (feeder) for supplying scrap as a raw material into the thermal decomposition unit. In addition, the thermal decomposition unit is provided with one or more gas extraction portions (vents) for extracting gas generated by thermal decomposition.

The thermal decomposition device includes a partial condenser that can separate a vinyl monomer and a high-boiling-point impurity mainly including an impurity (compound) having a boiling point higher than that of the vinyl monomer by introducing a gas containing the vinyl monomer generated by thermal decomposition by the thermal decomposition unit.

Specifically, the partial condenser can remove a high-boiling-point impurity having a boiling point higher than that of the vinyl monomer by condensing and liquefying the high-boiling-point impurities from a gas containing the vinyl monomer generated in the thermal decomposition unit by partial condensation, and as a result, the vinyl monomer can be purified and derived.

As the partial condenser, a partial condenser having any suitable conventionally known configuration corresponding to the flow rate, composition, and the like of the gas containing the vinyl monomer to be introduced can be employed.

Here, the thermal decomposition step and the partial condensation step relating to the regeneration of the vinyl monomer by the thermal decomposition unit, that is, the production of the recycled/bio raw material vinyl monomer will be briefly described.

The conditions (for example, cylinder temperature (°C), screw rotation speed (rpm), scrap supply rate (raw material supply rate) (kg/hr)) for performing the thermal decomposition step using a twin-screw extruder are not particularly limited. The conditions for performing the thermal decomposition step can be any suitable conditions, for example, in consideration of the characteristics, composition, and the like of the scrap to be treated.

The cylinder temperature in the thermal decomposition step may be usually 400°C to 500°C, and is preferably 450°C to 470°C, for example, when the scrap contains pure poly(methyl methacrylate).

The screw rotation speed in the thermal decomposition step may be usually 500 rpm to 1,500 rpm, and is preferably 500 rpm to 1,000 rpm, for example, when the scrap contains pure poly(methyl methacrylate).

The scrap supply amount in the thermal decomposition step may be appropriately changed according to the cylinder diameter of the thermal decomposition unit, and may be usually 10 kg/hour to 5,000 kg/hour, and is preferably, for example, 40 kg/hour to 90 kg/hour, when the cylinder diameter is 47 mm.

Specifically, the partial condensation step is a step of fractionating and condensing the vinyl monomer and the high-boiling-point impurity by controlling the temperature of the gas containing the vinyl monomer to a temperature equal to or higher than the boiling point of the vinyl monomer as a main component and lower than the boiling point and equal to or higher than the melting point of the high-boiling-point impurity.

The temperature in the partial condensation step can be any suitable temperature corresponding to the composition of the gas generated by thermal decomposition, such as the type of the vinyl monomer and high-boiling-point impurity to be fractionated and condensed.

According to the thermal decomposition device 1 of the present invention, it is possible to efficiently produce a vinyl polymer derived from a recycled/bio raw material vinyl monomer and a non-recycled/non-bio raw material vinyl monomer, particularly a vinyl polymer to which a mass balance system is applied, at a low cost with a high yield while reducing energy consumption.

### 2. Method for producing vinyl polymer

A method for producing a vinyl polymer of the first embodiment is a method for producing a vinyl polymer using the vinyl polymer production device 1 described above, the method including:
a derivation step of deriving, to the polymerization reaction tank 10 through the first pipe 71 by the raw material vinyl monomer supply pump 24 including the raw material vinyl monomer supply unit 20, a raw material vinyl monomer containing a non-recycled/non-bio raw material vinyl monomer supplied from the non-recycled/non-bio raw material vinyl monomer supply unit 22 for supplying a non-recycled/non-bio raw material vinyl monomer and a recycled/bio raw material vinyl monomer supplied from the recycled/bio raw material vinyl monomer supply unit 60;
a preparation step of performing bulk polymerization or solution polymerization of the raw material vinyl monomer supplied from the raw material vinyl monomer supply unit 20 in the polymerization reaction tank 10 to obtain a vinyl polymer composition in which a vinyl polymer and an unreacted vinyl monomer are mixed;
a separation step of deriving the obtained vinyl polymer composition from the polymerization reaction tank 10, introducing the vinyl polymer composition through the second pipe 72 into the devolatilization unit 30 from the vinyl polymer composition introduction port 32, and then devolatilizing the vinyl polymer composition by the devolatilization unit 30 to separate a liquid vinyl polymer and a gaseous unreacted vinyl monomer;
a removal step of further separating and removing an impurity component from the unreacted vinyl monomer by discharging the unreacted vinyl monomer through the first unreacted vinyl monomer discharge port 36 of the devolatilization unit 30 and the third pipe 73, and through the second unreacted vinyl monomer discharge port 38 and the fourth pipe 74, introducing the unreacted vinyl monomer into the purifier 40, and purifying the unreacted vinyl monomer;
a circulation step of deriving the unreacted vinyl monomer from which the impurity component is removed from the purifier 40, circulating the unreacted vinyl monomer to the raw material vinyl monomer supply unit 20 through the fifth pipe 75 by the circulation unit 50, and then performing the derivation step again; and
a discharge step of discharging the vinyl polymer from which the unreacted vinyl monomer is separated from the vinyl polymer discharge port 34 of the devolatilization unit 30 to obtain a vinyl polymer.

Hereinafter, each step that can be included in the method for producing a vinyl polymer will be specifically described.

### (1) Derivation step

The derivation step is a step of deriving the raw material vinyl monomer that may contain the non-recycled/non-bio raw material vinyl monomer supplied from the non-recycled/non-bio raw material vinyl monomer supply unit 22 for supplying a non-recycled/non-bio raw material vinyl monomer and the recycled/bio raw material vinyl monomer supplied from the recycled/bio raw material vinyl monomer supply unit 60, to the polymerization reaction tank 10 through the first pipe 71 by the raw material vinyl monomer supply pump 24 included in the raw material vinyl monomer supply unit 20.

The conditions such as the derived amount and the derivation rate of the raw material vinyl monomer in the derivation step can be any suitable conditions in consideration of the type, components, and the like of the selected raw material vinyl monomer.

Note that, in a case where the recycled/bio raw material vinyl monomer supply unit 60 is connected to the raw material vinyl monomer supply unit 20, the derivation step is performed using the recycled/bio raw material vinyl monomer supplied from the recycled/bio raw material vinyl monomer supply unit 60 to the raw material vinyl monomer supply unit 20.

### (2) Preparation step

The preparation step is a step of performing bulk polymerization or solution polymerization of the raw material vinyl monomer supplied from the raw material vinyl monomer supply unit 20 in the polymerization reaction tank 10 to obtain a vinyl polymer composition in which a vinyl polymer and an unreacted vinyl monomer are mixed.

The conditions (polymerization temperature, polymerization pressure, concentration of vinyl monomer, concentration of additive, polymerization time, and the like) in the polymerization of the vinyl monomer (preparation of the vinyl polymer (vinyl polymer composition that may contain a partially polymerized vinyl polymer)) in the preparation step may be appropriately determined in consideration of the structure, characteristics, and the like of a target vinyl polymer.

Note that, in a case where the recycled/bio raw material vinyl monomer supply unit 60 is connected to the polymerization reaction tank 10, the preparation step is performed using the recycled/bio raw material vinyl monomer supplied from the recycled/bio raw material vinyl monomer supply unit 60 to the polymerization reaction tank 10.

### (3) Separation step

The separation step is a step of deriving the prepared vinyl polymer composition from the polymerization reaction tank 10, introducing the vinyl polymer composition from the vinyl polymer composition introduction port 32 into the devolatilization unit 30 through the second pipe 72, and then devolatilizing the vinyl polymer composition by the devolatilization unit 30 to separate a liquid vinyl polymer and a gaseous unreacted vinyl monomer.

Specifically, in the separation step, the vinyl monomer and the impurity component are separated by controlling the temperature of the gaseous unreacted vinyl monomer (further, may contain impurity components such as a dimer, a chain transfer agent, an inert solvent, methanol, methyl propionate, methyl isobutyrate, methyl acrylate, and methyl α-hydroxyisobutyrate) generated by the devolatilization of the vinyl polymer composition by the devolatilization unit 30 to a temperature equal to or higher than the boiling point of the vinyl monomer as the main component and lower than the thermal decomposition temperature of the vinyl polymer.

For example, in a case where the unreacted vinyl monomer is methyl methacrylate, specifically, the temperature of the gas containing methyl methacrylate after being controlled to be "equal to or higher than the boiling point of methyl methacrylate and lower than the thermal decomposition temperature of the vinyl polymer" is, for example, preferably 100°C to 300°C, more preferably 150°C to 300°C, and still more preferably 200°C to 290°C.

The devolatilization treatment in the devolatilization unit 30 can be preferably performed, for example, by continuously separating and removing the unreacted vinyl monomer by adjusting the vent pressure in the first unreacted vinyl monomer discharge port 36 to - 0.01 to -0.04 MPa in gauge pressure notation, adjusting the vent pressure in the second unreacted vinyl monomer discharge port 38 to -0.09 to -0.1 MPa, and setting the temperature to 200 to 290°C.

### (4) Removal step

The removal step is a step of further separating and removing an impurity component from the unreacted vinyl monomer by discharging the unreacted vinyl monomer through the first unreacted vinyl monomer discharge port 36 of the devolatilization unit 30 and the third pipe 73 and through the second unreacted vinyl monomer discharge port 38 and the fourth pipe 74, introducing the unreacted vinyl monomer into the purifier 40, and purifying the unreacted vinyl monomer.

First, the unreacted vinyl monomer devolatilized in devolatilization unit 30 is derived to the purifier 40. When the unreacted vinyl monomer is derived from the devolatilization unit 30, an impurity having a relatively low boiling point, such as the low-boiling-point impurity described above, tends to be derived from the first unreacted vinyl monomer discharge port (upstream unreacted vinyl monomer discharge port) 36 in addition to the unreacted vinyl monomer, and an impurity having a relatively high boiling point, such as the high-boiling-point impurity described above, tends to be derived from the second unreacted vinyl monomer discharge port (downstream unreacted vinyl monomer discharge port) 38.

Next, the unreacted vinyl monomers discharged from the first unreacted vinyl monomer discharge port 36 and the second unreacted vinyl monomer discharge port 38 are introduced into the purifier 40 and purified.

Specifically, impurity components including a low-boiling-point impurity and a high-boiling-point impurity are separated and removed in the purifier 40 from the unreacted vinyl monomer that may contain the impurity components introduced into the purifier 40 described above.

Note that, in a case where the recycled/bio raw material vinyl monomer supply unit 60 is connected to the purifier 40, the removal step is performed using the recycled/bio raw material vinyl monomer supplied from the recycled/bio raw material vinyl monomer supply unit 60 to the purifier 40 in addition to the unreacted vinyl monomer.

In addition, in a case where the recycled/bio raw material vinyl monomer supply unit 60 is connected to any one or both of the third pipe 73 and the fourth pipe 74, the removal step is performed using the recycled/bio raw material vinyl monomer supplied from the recycled/bio raw material vinyl monomer supply unit 60 to any one or both of the third pipe 73 and the fourth pipe 74, in addition to the unreacted vinyl monomer derived from the devolatilization unit 30.

The conditions for performing the removal step are not particularly limited. The conditions such as a temperature, a flow rate, and a pressure in the purifier 40 can be set to any suitable conditions in consideration of a structure and characteristics of the vinyl polymer to be produced, characteristics of impurity components, and the like.

### (5) Circulation step

The circulation step is a step of deriving the unreacted vinyl monomer from which the impurity component is removed from the purifier 40, circulating the unreacted vinyl monomer to the raw material vinyl monomer supply unit 20 through the fifth pipe 75 by the circulation unit 50, and then (repeatedly) performing the derivation step (further, the preparation step, the separation step, and the removal step) described above again.

Specifically, using a metering pump or the like included in the circulation unit 50, the unreacted vinyl monomer purified by the purifier 40 and derived from the purifier 40 from which the impurity component is removed is circulated through the pipe 75 to the raw material vinyl monomer supply unit 20 (raw material monomer supply pump 24) described above, and the derivation step, the preparation step, the separation step, and the removal step described above are repeatedly performed, thereby producing a vinyl polymer while recycling the recovered unreacted vinyl monomer.

Note that, in a case where the recycled/bio raw material vinyl monomer supply unit 60 is connected to the circulation unit 50, the circulation step is performed using the recycled/bio raw material vinyl monomer supplied from the recycled/bio raw material vinyl monomer supply unit 60 to the circulation unit 50 in addition to the unreacted vinyl monomer.

### (6) Discharge step

The discharge step is a step of discharging the vinyl polymer from which an unreacted vinyl monomer (and an impurity component) is separated from the vinyl polymer discharge port 34 of the devolatilization unit 30 to obtain a vinyl polymer.

Specifically, the vinyl polymer produced by separating and removing the unreacted vinyl monomer and the impurity component by the devolatilization unit 30 is derived from the vinyl polymer discharge port 34 of the devolatilization unit 30. Next, the resulting product is treated with the post-treatment device described above to have a predetermined arbitrary suitable form such as a strand (filament) form, a sheet form, a flat plate form, or a pellet form, dried, and as necessary, temporarily stored, packaged, and commercialized.

According to the method for producing a vinyl polymer of the present invention, it is possible to efficiently produce a vinyl polymer derived from a recycled/bio raw material vinyl monomer and a non-recycled/non-bio raw material vinyl monomer, particularly a vinyl polymer to which a mass balance system is applied, at a low cost with a high yield while reducing energy consumption by a simple process.

### <Second embodiment>

### 1. Vinyl polymer production device

A vinyl polymer production device according to a second embodiment will be described with reference to Fig. 2. Note that constituent elements similar to those of the first embodiment already described are denoted by the same reference numerals, and detailed descriptions thereof will be omitted. Fig. 2 is a schematic view illustrating a configuration example of a vinyl polymer production device of the second embodiment.

### (1) Polymerization reaction tank

The polymerization reaction tank 10 is a functional unit for performing bulk polymerization or solution polymerization of a raw material vinyl monomer containing a recycled/bio raw material vinyl monomer, a non-recycled/non-bio raw material vinyl monomer, and a recovered unreacted vinyl monomer to produce a vinyl polymer composition in which a vinyl polymer is mixed with an unreacted vinyl monomer (that can be derived from any of a recycled/bio raw material vinyl monomer, a non-recycled/non-bio raw material vinyl monomer, and a recovered unreacted vinyl monomer).

### (2) Raw material vinyl monomer supply unit

The raw material vinyl monomer supply unit 20 is a functional unit capable of supplying the non-recycled/non-bio raw material vinyl monomer to the polymerization reaction tank 10. Note that, although details will be described below, the raw material vinyl monomer supply unit 20 is configured to be able to supply the recycled/bio raw material vinyl monomer, and further the unreacted vinyl monomer as well as the non-recycled/non-bio raw material vinyl monomer to the polymerization reaction tank 10.

The raw material vinyl monomer supply unit 20 includes the non-recycled/non-bio raw material vinyl monomer supply unit 22 and the raw material monomer supply pump 24 provided in the non-recycled/non-bio raw material vinyl monomer supply unit 22.

Note that, the raw material monomer supply pump 24 is a functional unit capable of supplying the non-recycled/non-bio raw material vinyl monomer supplied from the non-recycled/non-bio raw material vinyl monomer supply unit 22, further, a recycled/bio raw material vinyl monomer to be described below, and further, the unreacted vinyl monomer to the polymerization reaction tank 10.

The raw material vinyl monomer supply unit 20 (raw material monomer supply pump 24) is connected to the polymerization reaction tank 10 by the first pipe 71 having one end connected to the polymerization reaction tank 10 and the other end connected to the raw material vinyl monomer supply unit 20.

### (3) Devolatilization unit

The vinyl polymer production device 1 includes the devolatilization unit 30. The devolatilization unit 30 is a functional unit having a function of devolatilizing the vinyl polymer composition derived from the polymerization reaction tank 10 described above and separating a liquid vinyl polymer and a gaseous unreacted vinyl monomer (containing other impurity components).

Examples of the devolatilization unit 30 include an extruder including a devolatilization extruder, a thin film evaporator, an evaporator, a multi-tube heat exchanger, and a special heat exchanger.

The devolatilization unit 30 is preferably a devolatilization extruder. Suitable examples of the devolatilization extruder serving as the devolatilization unit 30 include twin-screw extruders such as a twin-screw co-rotating extruder and a twin-screw counter-rotating extruder. Examples of the devolatilization extruder include a vent extractor type devolatilization extruder such as TEX (trade name) manufactured by The Japan Steel Works, LTD.

As illustrated in Fig. 2, the devolatilization unit 30 is provided with the vinyl polymer composition introduction port 32 for supplying the vinyl polymer composition into the devolatilization unit 30.

The devolatilization unit 30 is provided with one or more unreacted vinyl monomer discharge ports for extracting a gas containing an unreacted vinyl monomer produced by being separated into a liquid vinyl polymer and a gaseous unreacted vinyl monomer by a devolatilization treatment and an impurity component that can be inevitably contained outside the devolatilization unit 30.

The devolatilization unit 30 is provided with the vinyl polymer discharge port 34 for discharging the produced vinyl polymer to the outside of the devolatilization unit 30. The vinyl polymer discharge port 34 is usually provided in the vicinity of the terminal portion on the downstream side of the devolatilization unit 30.

The first unreacted vinyl monomer discharge port 36 is disposed on the upstream side of the devolatilization unit 30, that is, near the terminal portion on the side opposite to the terminal portion on the downstream side where the vinyl polymer discharge port 34 is provided.

The second unreacted vinyl monomer discharge port 38 is disposed downstream of the devolatilization unit 30, that is, near the vinyl polymer discharge port 34.

The devolatilization unit 30 is connected to the polymerization reaction tank 10 by the second pipe 72 having one end connected to the polymerization reaction tank 10 and the other end connected to the devolatilization unit 30.

### (4) Purifier

The vinyl polymer production device 1 includes the purifier 40. The purifier 40 is a functional unit for separating and removing an impurity component from the unreacted vinyl monomer (in addition to the unreacted vinyl monomer, an impurity component may be inevitably contained) derived from the devolatilization unit 30 described above other than the unreacted vinyl monomer.

As the purifier 40, a rectification column (distillation column) having any suitable conventionally known configuration can be applied. Examples of a suitable rectification column for the purifier 40 include multistage rectification columns.

The purifier 40 is connected to the devolatilization unit 30 by the third pipe 73 having one end connected to the first unreacted vinyl monomer discharge port 36 of the devolatilization unit 30 and the other end connected to the purifier 40 and the fourth pipe 74 having one end connected to the second unreacted vinyl monomer discharge port 38 and the other end connected to the purifier 40.

### (5) Circulation unit

The vinyl polymer production device 1 includes the circulation unit 50. The circulation unit 50 is a functional unit for circulating the unreacted vinyl monomer from which the impurity component is removed by the purifier 40 described above to the raw material vinyl monomer supply unit 20 (raw material monomer supply pump 24) described above.

The circulation unit 50 is provided in the fifth pipe 75 having one end connected to the purifier 40 and the other end connected to the circulation unit 50.

### (6) Recycled/bio raw material vinyl monomer supply unit

The recycled/bio raw material vinyl monomer supply units 60, that is, a first recycled/bio raw material vinyl monomer supply unit 60a, a second recycled/bio raw material vinyl monomer supply unit 60b, a third recycled/bio raw material vinyl monomer supply unit 60c, a fourth recycled/bio raw material vinyl monomer supply unit 60d, a fifth recycled/bio raw material vinyl monomer supply unit 60e, and a sixth recycled/bio raw material vinyl monomer supply unit 60f have respective configurations in which a recycled/bio raw material vinyl monomer introduced from the outside is connected to a subsequent stage, that is, functional units capable of supplying the externally introduced recycled/bio raw material vinyl monomer to the raw material monomer pump 24 to which the first recycled/bio raw material vinyl monomer supply unit 60a is connected, the polymerization reaction tank 10 to which the second recycled/bio raw material vinyl monomer supply unit 60b is connected, the third pipe 73 to which the third recycled/bio raw material vinyl monomer supply unit 60c is connected, the fourth pipe 74 to which the fourth recycled/bio raw material vinyl monomer supply unit 60d is connected, the purifier 40 to which the fifth recycled/bio raw material vinyl monomer supply unit 60e is connected, and the circulation unit 50 to which the sixth recycled/bio raw material vinyl monomer supply unit 60f is connected.

In the vinyl polymer production device 1, at least one selected from the group consisting of the first recycled/bio raw material vinyl monomer supply unit 60a, the second recycled/bio raw material vinyl monomer supply unit 60b, the third recycled/bio raw material vinyl monomer supply unit 60c, the fourth recycled/bio raw material vinyl monomer supply unit 60d, the fifth recycled/bio raw material vinyl monomer supply unit 60e, and the sixth recycled/bio raw material vinyl monomer supply unit 60f may be provided.

The vinyl polymer production device 1 preferably includes the third recycled/bio raw material vinyl monomer supply unit 60c and/or the fourth recycled/bio raw material vinyl monomer supply unit 60d, and more preferably includes the fourth recycled/bio raw material vinyl monomer supply unit 60d.

When the recycled/bio raw material vinyl monomer supply unit 60 includes the fifth recycled/bio raw material vinyl monomer supply unit 60e, the devolatilization unit 30 and the purifier 40 can be continuously operated with a simpler configuration without providing the cooling unit 74a in the fourth pipe 74 connected to the devolatilization unit 30.

Note that, in a case where the recycled/bio raw material vinyl monomer applied to the vinyl polymer production device 1 is, for example, a recycled raw material vinyl monomer recycled by chemical recycling, the above-described thermal decomposition device capable of producing (recycling) and supplying the recycled raw material vinyl monomer is connected to the recycled/bio raw material vinyl monomer supply unit 60 by, for example, a stainless steel pipe or the like.

On the other hand, in a case where the recycled/bio raw material vinyl monomer applied to the vinyl polymer production device 1 is, for example, a bio raw material vinyl monomer, a bio raw material vinyl monomer produced in any suitable conventionally known bio raw material vinyl monomer production plant may be supplied to the recycled/bio raw material vinyl monomer supply unit 60, and the bio vinyl monomer production plant and the recycled/bio raw material vinyl monomer supply unit 60 may be connected by, for example, a stainless steel pipe or the like, so that the bio raw material vinyl monomer derived from the bio vinyl monomer production plant may be directly supplied to the recycled/bio raw material vinyl monomer supply unit 60.

### (7) Temperature control unit

As illustrated in Fig. 2, in the second embodiment, the second pipe 72 further includes a temperature control unit 72a provided so as to be in contact with the outer surface thereof or to penetrate the inside thereof.

The temperature control unit 72a is a functional unit for controlling the temperature of the vinyl polymer composition derived from the polymerization reaction tank 10.

In the present embodiment, the temperature control unit 72a is a functional unit that can control the temperature of the vinyl polymer composition circulating in the second pipe 72 to a temperature equal to or higher than the softening point and lower than the thermal decomposition temperature of the vinyl polymer mainly contained in the vinyl polymer composition.

As the temperature control unit 72a, any suitable conventionally known configuration can be applied. Specifically, at least one selected from the group consisting of a jacket, a double-pipe heat exchanger, an electric heater, and a heat insulating material capable of circulating a medium (a heat medium or a cold medium) therein can be applied as the temperature control unit 72a.

Note that, in a case where the temperature control unit 72a is formed of two or more kinds of members such as a combination of a double-pipe heat exchanger and a heat insulating material, at least one kind of member may be in contact with the outer surface of the second pipe 72, in other words, the two or more kinds of members may be provided so as to be laminated on the outer surface of the second pipe 72. The temperature control unit 72a can be provided so as to cover the outer periphery of the second pipe 72 without interruption, for example.

The installation form of the temperature control unit 72a is not particularly limited as long as the temperature of the vinyl polymer composition circulating in the second pipe 72 can be effectively controlled.

In the present embodiment, it is preferable to use a double-pipe heat exchanger as the temperature control unit 72a. The double-pipe heat exchanger is preferably a double-pipe heat exchanger using water vapor as a heat medium or a double-pipe heat exchanger using water as a cooling medium.

In addition, in a case where the temperature control unit 72a includes a heat insulating material, the heat insulating material is preferably at least one selected from the group consisting of rock wool, glass wool, calcium silicate, and water repellent perlite.

According to the vinyl polymer production device 1 of the present embodiment, since the second pipe 72 includes the temperature control unit 72a, the temperature control unit can compensate for the temperature decrease due to the latent heat of evaporation in the devolatilization step. As a result, the device load in the devolatilization step due to the temperature decrease can be suppressed, and the devolatilization treatment in the devolatilization unit 30 in the subsequent stage can be more efficiently performed.

### (8) First cooling unit and second cooling unit

In the second embodiment, the third pipe 73 further includes a first cooling unit 73a provided so as to be in contact with the outer surface thereof or to penetrate the inside thereof. In a case where the third recycled/bio raw material vinyl monomer supply unit 60c is connected to the third pipe 73, the first cooling unit 73a is preferably provided in a region of the third pipe 73 closer to the devolatilization unit 30 than the third recycled/bio raw material monomer supply unit 60c.

The cooling unit 73a is a functional unit for cooling and liquefying the gas (gaseous unreacted vinyl monomer) derived from the devolatilization unit 30.

It is preferable to use a double-pipe heat exchanger as the first cooling unit 73a. The double-pipe heat exchanger is preferably, for example, a double-pipe heat exchanger using water as a cooling medium.

In addition, in a case where the first cooling unit 73a includes a heat insulating material, the heat insulating material is preferably at least one selected from the group consisting of rock wool, glass wool, calcium silicate, and water repellent perlite.

In the second embodiment, the fourth pipe 74 further includes a second cooling unit 74a provided so as to be in contact with the outer surface thereof or to penetrate the inside thereof. In a case where the fourth recycled/bio raw material vinyl monomer supply unit 60d is connected to the fourth pipe 74, the second cooling unit 74a is preferably provided in a region of the fourth pipe 74 closer to the devolatilization unit 30 than the fourth recycled/bio raw material monomer supply unit 60d.

The function, form, and the like of the second cooling unit 74a are similar to those of the first cooling unit 73a described above, and thus the descriptions thereof will be omitted.

According to the vinyl polymer production device 1 of the second embodiment, since the vinyl polymer production device 1 includes the first cooling unit 73a and/or the second cooling unit 74a, the liquefied unreacted vinyl monomer can be supplied to the purifier 40, and as a result, purification in the purifier 40 can be more efficiently performed.

### (9) Raw material vinyl monomer preparation tank

In the second embodiment, the vinyl polymer production device 1 includes the raw material vinyl monomer preparation tank 80 (first raw material vinyl monomer preparation tank 80a and/or second raw material vinyl monomer preparation tank 80b).

The raw material vinyl monomer preparation tank 80 is a functional unit that can prepare a raw material vinyl monomer to be supplied to the polymerization reaction tank 10 so that its composition, characteristics, and the like fall within suitable ranges, for example, by adding a predetermined vinyl monomer or further adding an additive such as an antioxidant, an ultraviolet absorber, or a release agent in addition to the polymerization initiator and the chain transfer agent described above.

As illustrated in Fig. 2, the first raw material vinyl monomer preparation tank 80a is provided so that the unreacted vinyl monomer circulated by the circulation unit 50 can be introduced into the fifth pipe 75, further, the additive and the like can be introduced and mixed (prepared), and the mixture can be introduced into the raw material vinyl monomer supply unit 20 (raw material monomer supply pump 24), and the second raw material vinyl monomer preparation tank 80b is provided so that the unreacted vinyl monomer can be supplied to the raw material vinyl monomer supply unit 20 (raw material monomer supply pump 24) by any suitable conventionally known stainless steel pipe or the like.

Here, examples of the chain transfer agent that can be used include mercaptans, particularly, butyl mercaptan, octyl mercaptan, and dodecyl mercaptan.

In addition, examples of the initiator include azo compounds such as 2,2-azobisisobutyronitrile, 2,2-azobis(2,4-dimethylvaleronitrile), and 2,2-azobis(2-methylbutyronitrile), and organic peroxides such as 1,1-bis(tert-butylperoxy)3,3,5-trimethylcyclohexane, tert-butylperoxy isobutyrate, benzoyl peroxide, and lauroyl peroxide.

As illustrated in Fig. 2, in the present embodiment, the first raw material vinyl monomer preparation tank 80a is provided in a region of the fifth pipe 75 in the vicinity of the raw material vinyl monomer supply unit 20 (raw material monomer supply pump 24). The second raw material vinyl monomer preparation tank 80b is connected to the raw material vinyl monomer supply unit 20.

The configuration, material, size, and the like of the raw material vinyl monomer preparation tank 80 are not particularly limited as long as the above function can be exhibited. The raw material vinyl monomer preparation tank 80 can be constituted by, for example, any suitable conventionally known stainless steel tank, a stirring blade provided in the tank, and further equipment including a metering pump such as a plunger pump or a diaphragm pump, an on-off valve, a meter such as a flow meter, a thermometer, or a pressure gauge, a temperature control unit such as a cooler, a heater, or a heat exchanger, and the like.

Specifically, the preparation in the raw material vinyl monomer preparation tank 80 can be performed as follows: a part of the raw material monomer supplied to the raw material vinyl monomer supply unit 20 and before being supplied to the polymerization reaction tank 10 is taken out to the outside, the components, characteristics, and the like of the taken out raw material monomer are analyzed by any suitable conventionally known to evaluate whether the composition, characteristics, and the like of the raw material monomer are within suitable ranges, and as a result of the evaluation, for example, when a specific component is insufficient or a predetermined characteristic is not satisfied, an additive and the like for improving the insufficient component and characteristics are prepared in the raw material vinyl monomer preparation tank 80, and the composition, characteristics, and the like of the raw material monomer are adjusted within suitable ranges in the raw material vinyl monomer supply unit 20.

According to the vinyl polymer production device 1 of the second embodiment, since the raw material vinyl monomer preparation tank 80 is provided, it is possible to more accurately and efficiently produce a vinyl polymer having desired characteristics such as desired components, polymerization ratios, and molecular weights, and desired characteristics such as weather resistance.

### (10) Storage tank (first storage tank or second storage tank)

In the second embodiment, the vinyl polymer production device 1 includes a storage tank 90 (a first storage tank 92 and/or a second storage tank 94).

The storage tank 90 is a functional unit capable of temporarily storing a predetermined amount of components such as an introduced undecomposed monomer and further deriving the components to the functional unit in a subsequent stage as necessary. Specifically, the first storage tank 92 is a functional unit capable of further storing the raw material vinyl monomer derived from the devolatilization unit 30 and liquefied by the second cooling unit 74a as necessary, and further the recycled/bio raw material vinyl monomer supplied from the fourth recycled/bio raw material vinyl monomer supply unit 60d in a case where the fourth recycled/bio-raw material vinyl monomer supply unit 60d is provided, and the second storage tank 94 is a functional unit capable of storing the undecomposed monomer derived from the purifier 40 and introduced by the fifth pipe 75 and the circulation unit 50.

As illustrated in Fig. 2, in the present embodiment, the first storage tank 92 is provided in a region of the fourth pipe 74 closer to the purifier 40 (downstream side) than the second cooling unit 74a. In addition, the second storage tank 94 is provided in a region of the fifth pipe 75 in the vicinity of the raw material vinyl monomer supply unit 20 (raw material monomer supply pump 24) and closer to the purifier 40 than the first raw material vinyl preparation tank 80a.

The configuration, material, size, and the like of the storage tank 90 are not particularly limited as long as the above function can be exhibited. The storage tank 90 can be constituted by, for example, any suitable conventionally known stainless steel tank, and further equipment including a metering pump such as a plunger pump or a diaphragm pump, an on-off valve, a meter such as a flow meter, a thermometer, or a pressure gauge, a temperature control unit such as a cooler, a heater, or a heat exchanger, and the like.

Here, as the fourth pipe 74, for example, any suitable conventionally known pipe formed of stainless steel can be applied.

According to the vinyl polymer production device 1 of the second embodiment, since the storage tank 90 is provided, in the case of being provided in the fourth pipe 74, an unreacted vinyl monomer flowing through the fourth pipe 74, which contains a high-boiling-point impurity and is particularly easily liquefied, can be temporarily stored in the first storage tank 92 and more easily and efficiently introduced into the purifier 40 for purification, in the case of being provided in the fifth pipe 75, before the raw material vinyl monomer is introduced into the raw material vinyl monomer preparation tank 80, the raw material vinyl monomer supply unit 20, and the polymerization reaction tank 10, for example, a part of the composition containing the unreacted vinyl monomer and the raw material vinyl monomer once stored in the second storage tank 94 is extracted and its composition, properties, and the like can be confirmed, and for example, the raw material vinyl monomer preparation tank 80 allows for the replenishing of an insufficient component; thus, a vinyl polymer having desired components, properties, and characteristics can be produced more accurately and efficiently.

### (11) Other equipment

Since (i) the post-treatment device, (ii) the exhaust gas treatment device, and (iii) the thermal decomposition device that can be included in the vinyl polymer production device 1 of the second embodiment are the same as the equipment and devices of the first embodiment described above, specific descriptions thereof will be omitted.

### 2. Method for producing vinyl polymer

The method for producing a vinyl polymer of the second embodiment is a production method using the vinyl polymer production device 1 of the second embodiment described above. The derivation step, the preparation step, the separation step, the removal step, the circulation step, and the discharge step according to the method for producing a vinyl polymer of the second embodiment are the same as those of the production method of the first embodiment described above, and thus different points will be specifically described below.
(1) In a case where the vinyl polymer production device 1 further includes a first cooler 73a provided in a region of the third pipe 73 to which the recycled/bio raw material vinyl monomer supply unit 60 is connected, the region being closer to the devolatilization unit 30 than the recycled/bio raw material monomer supply unit 60, and/or a second cooling unit 74a provided in a region of the fourth pipe 74 to which the recycled/bio raw material vinyl monomer supply unit 60 is connected, the region being closer to the devolatilization unit 30 than the recycled/bio raw material monomer supply unit 60, the method further includes, after the separation step and before the removal step, a cooling step of introducing a gaseous unreacted vinyl monomer derived from the devolatilization unit 30 into the first cooling unit 73a and/or the second cooling unit 74a and liquefying the unreacted vinyl monomer by cooling.
   In a case where the method for producing a vinyl polymer includes the cooling step, the liquefied unreacted vinyl monomer can be supplied to the purifier 40, such that purification in the purifier 40, recycling of the unreacted vinyl monomer, and production of the vinyl polymer can be more efficiently and effectively performed.
(2) In a case where the vinyl polymer production device 1 further includes the raw material vinyl monomer preparation tank 80 provided in the region of the fifth pipe 75 in the vicinity of the raw material vinyl monomer supply unit 20 or connected to the raw material vinyl monomer supply unit 20, the circulation step described above is a step of introducing the unreacted vinyl monomer from which the impurity component is removed, the unreacted vinyl monomer being derived from the purifier 40, into the raw material vinyl monomer preparation tank 80 by the circulation unit 50 to adjust the composition of the raw material vinyl monomer, circulating the raw material vinyl monomer of which the composition is adjusted to the raw material vinyl monomer supply unit 60, and then performing the derivation step again.
   When the circulation step is performed as described above using the raw material vinyl monomer preparation tank 80, a vinyl polymer having desired components, properties, and characteristics can be more accurately and efficiently produced.
(3) In a case where the vinyl polymer production device 1 further includes a first storage tank 92 provided in a region of the fourth pipe 74 in the vicinity of the purifier 40, and a second storage tank 94 provided in a region of the fifth pipe 75 in the vicinity of the raw material vinyl monomer supply unit 20, the method further includes, after the separation step and before the removal step, a step of storing the unreacted vinyl monomer derived from the devolatilization unit 30 in the first storage tank 92 as a liquid unreacted vinyl monomer, and the circulation step is a step of deriving an unreacted vinyl monomer from which an impurity component is removed from the purifier 40, storing the unreacted vinyl monomer as a liquid unreacted vinyl monomer in the second storage tank 94, circulating the unreacted vinyl monomer to the raw material vinyl monomer supply unit 20, and then performing the derivation step again.

In the method for producing a vinyl polymer, in the case where the storage tank 90 is provided in the fourth pipe 74, an unreacted vinyl monomer flowing through the fourth pipe 74, which contains a high-boiling-point impurity and is particularly easily liquefied, can be temporarily stored and more easily and efficiently introduced into the purifier 40 for purification, in the case of being provided in the fifth pipe 75, before the raw material vinyl monomer is introduced into the raw material vinyl monomer preparation tank 80, the raw material vinyl monomer supply unit 20, and the polymerization reaction tank 10, for example, a part of the composition containing the unreacted vinyl monomer and the raw material vinyl monomer once stored is extracted and its composition, properties, and the like can be confirmed, and for example, the raw material vinyl monomer preparation tank 80 allows for the replenishing of an insufficient component; thus, a vinyl polymer having desired components, properties, and characteristics can be produced more accurately and efficiently, and it is possible to produce a vinyl polymer derived from a recycled/bio raw material vinyl monomer and a non-recycled/non-bio raw material vinyl monomer, particularly, a vinyl polymer to which the mass balance system is applied, efficiently at a low cost with a high yield while reducing energy consumption through a simple process.

### DESCRIPTION OF REFERENCE SIGNS

1 Vinyl polymer production device
10 Polymerization reaction tank
20 Raw material vinyl monomer supply unit
22 Non-recycled/non-bio raw material vinyl monomer supply unit
24 Raw material vinyl monomer supply pump
26 Polymerization initiator supply unit
28 Chain transfer agent supply unit
30 Devolatilization unit
32 Vinyl polymer composition introduction port
34 Vinyl polymer discharge port
36 First unreacted vinyl monomer discharge port (upstream unreacted vinyl monomer discharge port)
38 Second unreacted vinyl monomer discharge port (downstream unreacted vinyl monomer discharge port)
40 Purifier
50 Circulation unit
60 Recycled/bio raw material vinyl monomer supply unit
60a First recycled/bio raw material vinyl monomer supply unit
60b Second recycled/bio raw material vinyl monomer supply unit
60c Third recycled/bio raw material vinyl monomer supply unit
60d Fourth recycled/bio raw material vinyl monomer supply unit
60e Fifth recycled/bio raw material vinyl monomer supply unit
60f Sixth recycled/bio raw material vinyl monomer supply unit
71 First pipe
72 Second pipe
72a Temperature control unit
73 Third pipe
73a First cooling unit
74 Fourth pipe
74a Second cooling unit
75 Fifth pipe
80 Raw material vinyl monomer preparation tank
80a First raw material vinyl monomer preparation tank
80b Second raw material vinyl monomer preparation tank
90 Storage tank
92 First storage tank
94 Second storage tank

## Claims

1. A vinyl polymer production device comprising:
a polymerization reaction tank for performing bulk polymerization or solution polymerization of a raw material vinyl monomer containing a recycled/bio raw material vinyl monomer and a non-recycled/non-bio raw material vinyl monomer to obtain a vinyl polymer composition in which a vinyl polymer and an unreacted vinyl monomer are mixed;
a raw material vinyl monomer supply unit for supplying the vinyl monomer to the polymerization reaction tank, the raw material vinyl monomer supply unit being connected to the polymerization reaction tank by a first pipe having one end connected to the polymerization reaction tank and the other end connected to the raw material vinyl monomer supply unit, and including a non-recycled/non-bio raw material vinyl monomer supply unit for supplying the non-recycled/non-bio raw material vinyl monomer and a raw material vinyl monomer supply pump for deriving the vinyl monomer to the polymerization reaction tank;
a devolatilization unit for devolatilizing the vinyl polymer composition derived from the polymerization reaction tank to separate a liquid vinyl polymer and a gaseous unreacted vinyl monomer, the devolatilization unit being connected to the polymerization reaction tank by a second pipe having one end connected to the polymerization reaction tank and the other end connected to the devolatilization unit, and having a vinyl polymer composition introduction port for introducing the vinyl polymer composition, a vinyl polymer discharge port for discharging the vinyl polymer, a first unreacted vinyl monomer discharge port for discharging the unreacted vinyl monomer, and a second unreacted vinyl monomer discharge port disposed downstream of the first unreacted vinyl monomer discharge port;
a purifier for separating and removing an impurity component from the unreacted vinyl monomer derived from the devolatilization unit, the purifier being connected to the devolatilization unit by a third pipe having one end connected to the first unreacted vinyl monomer discharge port and the other end connected to the purifier, and connected to the devolatilization unit by a fourth pipe having one end connected to the second unreacted vinyl monomer discharge port and the other end connected to the purifier; and
a circulation unit for circulating the unreacted vinyl monomer from which the impurity component is removed by the purifier to the raw material vinyl monomer supply unit, the circulation unit being provided in a fifth pipe having one end connected to the purifier and the other end connected to the raw material vinyl monomer supply unit,
wherein a recycled/bio raw material vinyl monomer supply unit for supplying the recycled/bio raw material vinyl monomer is connected to at least one selected from the group consisting of the raw material vinyl monomer supply unit, the polymerization reaction tank, the purifier, the circulation unit, and the third pipe.

2. The vinyl polymer production device according to claim 1, wherein the recycled/bio raw material vinyl monomer supply unit is connected to the third pipe.

3. The vinyl polymer production device according to claim 1 or 2, wherein the devolatilization unit is a devolatilization extruder.

4. The vinyl polymer production device according to claim 2, further comprising
a first cooling unit provided in a region of the third pipe to which the recycled/bio raw material vinyl monomer input part is connected, the region being closer to the devolatilization unit than the recycled/bio raw material monomer input part,
wherein the first cooling unit is a cooling unit for liquefying the gaseous unreacted vinyl monomer.

5. The vinyl polymer production device according to claim 1 or 2, further comprising a raw material vinyl monomer preparation tank for adjusting a composition of the raw material vinyl monomer supplied to the polymerization reaction tank, the raw material vinyl monomer preparation tank being provided in a region of the fifth pipe in the vicinity of the raw material vinyl monomer supply unit or connected to the raw material vinyl monomer supply unit.

6. The vinyl polymer production device according to claim 1 or 2, further comprising
a first storage tank for storing the unreacted vinyl monomer derived from the devolatilization unit as a liquid unreacted vinyl monomer, the first storage tank being provided in a region of the fourth pipe in the vicinity of the purifier; and
a second storage tank for storing the unreacted vinyl monomer derived from the purifier as a liquid unreacted vinyl monomer, the second storage tank being provided in a region of the fifth pipe in the vicinity of the raw material monomer supply unit.

7. The vinyl polymer production device according to claim 1 or 2, wherein the raw material vinyl monomer and the unreacted vinyl monomer are (meth)acrylic acid esters.

8. A method for producing a vinyl polymer using the vinyl polymer production device according to claim 1 or 2, the method comprising:
a derivation step of deriving, to the polymerization reaction tank through the first pipe by the raw material vinyl monomer supply pump included in the raw material vinyl monomer supply unit, a raw material vinyl monomer containing a non-recycled/non-bio raw material vinyl monomer supplied from the non-recycled/non-bio raw material vinyl monomer supply unit for supplying a non-recycled/non-bio raw material vinyl monomer and a recycled/bio raw material vinyl monomer supplied from the recycled/bio raw material vinyl monomer supply unit;
a preparation step of performing bulk polymerization or solution polymerization of the raw material vinyl monomer supplied from the raw material vinyl monomer supply unit in the polymerization reaction tank to obtain a vinyl polymer composition in which a vinyl polymer and an unreacted vinyl monomer are mixed;
a separation step of deriving the obtained vinyl polymer composition from the polymerization reaction tank, introducing the vinyl polymer composition through the second pipe into the devolatilization unit from the vinyl polymer composition introduction port, and then devolatilizing the vinyl polymer composition by the devolatilization unit to separate a liquid vinyl polymer and a gaseous unreacted vinyl monomer;
a removal step of further separating and removing an impurity component from the unreacted vinyl monomer by discharging the unreacted vinyl monomer through the first unreacted vinyl monomer discharge port of the devolatilization unit and the third pipe, introducing the unreacted vinyl monomer into the purifier, and purifying the unreacted vinyl monomer;
a circulation step of deriving the unreacted vinyl monomer from which the impurity component is removed from the purifier, circulating the unreacted vinyl monomer to the raw material vinyl monomer supply unit through the fifth pipe by the circulation unit, and then performing the derivation step again; and
a discharge step of discharging the vinyl polymer from which the unreacted vinyl monomer is separated from the vinyl polymer discharge port of the devolatilization unit to obtain a vinyl polymer.

9. The method for producing a vinyl polymer according to claim 8, wherein
the recycled/bio raw material vinyl monomer supply unit for supplying a recycled/bio raw material vinyl monomer is connected to at least one selected from the group consisting of the raw material vinyl monomer supply unit, the polymerization reaction tank, the purifier, the circulation unit, and the third pipe,
in a case where the recycled/bio raw material vinyl monomer supply unit is connected to the raw material vinyl monomer supply unit, the derivation step is a step performed using the recycled/bio raw material vinyl monomer supplied from the recycled/bio raw material vinyl monomer supply unit to the raw material vinyl monomer supply unit,
in a case where the recycled/bio raw material vinyl monomer supply unit is connected to the polymerization reaction tank, the preparation step is a step performed using the recycled/bio raw material vinyl monomer supplied from the recycled/bio raw material vinyl monomer supply unit to the polymerization reaction tank,
in a case where the recycled/bio raw material vinyl monomer supply unit is connected to the purifier, the removal step is a step performed using the recycled/bio raw material vinyl monomer supplied from the recycled/bio raw material vinyl monomer supply unit to the purifier in addition to the unreacted vinyl monomer,
in a case where the recycled/bio raw material vinyl monomer supply unit is connected to the circulation unit, the circulation step is a step performed using the recycled/bio raw material vinyl monomer supplied from the recycled/bio raw material vinyl monomer supply unit to the circulation unit in addition to the unreacted vinyl monomer, and
in a case where the recycled/bio raw material vinyl monomer supply unit is connected to the third pipe, the removal step is a step performed using the recycled/bio raw material vinyl monomer supplied from the recycled/bio raw material vinyl monomer supply unit to the third pipe in addition to the unreacted vinyl monomer derived from the devolatilization unit.

10. The method for producing a vinyl polymer according to claim 9, wherein
the recycled/bio raw material vinyl monomer supply unit is connected to the third pipe, and
the removal step is a step performed using the recycled/bio raw material vinyl monomer supplied from the recycled/bio raw material vinyl monomer supply unit through the third pipe in addition to the unreacted vinyl monomer derived from the devolatilization unit.

11. The method for producing a vinyl polymer according to claim 10, further comprising,
after the separation step and before the removal step, a cooling step of introducing a gaseous unreacted vinyl monomer derived from the devolatilization unit into a first cooling unit, and cooling and liquefying the gaseous unreacted vinyl monomer, the first cooling unit being further provided in a region of the third pipe to which the recycled/bio raw material vinyl monomer supply unit is connected, the region being closer to the devolatilization unit than the recycled/bio raw material monomer supply unit.

12. The method for producing a vinyl polymer according to claim 8, wherein
the raw material vinyl monomer preparation tank is further provided, the raw material vinyl monomer preparation tank being provided in a region of the fifth pipe in the vicinity of the raw material vinyl monomer supply unit or connected to the raw material vinyl monomer supply unit, and
the circulation step is a step of introducing an unreacted vinyl monomer from which an impurity component is removed into the raw material vinyl monomer preparation tank by the circulation unit, the unreacted vinyl monomer being derived from the purifier, adjusting a composition of the raw material vinyl monomer, circulating the raw material vinyl monomer having the adjusted composition to the raw material vinyl monomer supply unit, and then performing the derivation step again.

13. The method for producing a vinyl polymer according to claim 8, further comprising,
after the separation step and before the removal step, a step of storing the unreacted vinyl monomer derived from the devolatilization unit in a first storage tank as a liquid unreacted vinyl monomer,
wherein the circulation step is a step of deriving an unreacted vinyl monomer from which an impurity component is removed from the purifier, storing the unreacted vinyl monomer as a liquid unreacted vinyl monomer in a second storage tank, circulating the unreacted vinyl monomer to the raw material vinyl monomer supply unit, and then performing the derivation step again, and
the first storage tank provided in a region of the fourth pipe in the vicinity of the purifier, and the second storage tank provided in a region of the fifth pipe in the vicinity of the raw material vinyl monomer supply unit are further provided.

14. The method for producing a vinyl polymer according to claim 8, wherein the raw material vinyl monomer and the unreacted vinyl monomer are (meth)acrylic acid esters.
